(19) Europäisches Patentamt / European Patent Office / Office européen des brevets

(11) **EP 4 043 506 A1**

(12) **EUROPEAN PATENT APPLICATION**
published in accordance with Art. 153(4) EPC

(43) Date of publication:
**17.08.2022 Bulletin 2022/33**

(21) Application number: **20873542.3**

(22) Date of filing: **25.09.2020**

(51) International Patent Classification (IPC):
**C08F 255/04** (2006.01)    **C08F 279/02** (2006.01)
**C08L 51/04** (2006.01)    **C08L 69/00** (2006.01)
**C08L 101/00** (2006.01)

(52) Cooperative Patent Classification (CPC):
**C08F 255/04; C08F 279/02; C08L 51/04;
C08L 69/00; C08L 101/00**

(86) International application number:
**PCT/JP2020/036287**

(87) International publication number:
**WO 2021/070633 (15.04.2021 Gazette 2021/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.10.2019 JP 2019186135**

(71) Applicant: **Techno-UMG Co., Ltd.
Tokyo 105-0021 (JP)**

(72) Inventor: **HIRAISHI, Kentaro
Tokyo 105-0021 (JP)**

(74) Representative: **Vossius & Partner
Patentanwälte Rechtsanwälte mbB
Siebertstraße 3
81675 München (DE)**

(54) **THERMOPLASTIC RESIN COMPOSITION AND MOLDED ARTICLE OF SAME**

(57)    A thermoplastic resin composition capable of forming a molded article having a consistent appearance excellent in terms of matte property is provided. A thermoplastic resin composition comprising a vinyl graft polymer (A), a vinyl non-graft polymer (B), and a matting agent (C), wherein a mass ratio (Q1)/(Q2) of a vinyl resin component (Q1) of a chloroform soluble component (Q) of the thermoplastic resin composition, the vinyl resin component (Q1) having a weight-average molecular weight of less than 1,000,000, to a vinyl resin component (Q2) of the chloroform soluble component (Q), the vinyl resin component (Q2) having a weight-average molecular weight of 1,000,000 or more, is 99.5/0.5 to 55/45.

[Fig.1]

Fig. 1

EP 4 043 506 A1

## Description

Technical Field

The present invention relates to a thermoplastic resin composition capable of forming a molded article having a consistent appearance excellent in terms of matte property and a molded article formed of the thermoplastic resin composition.

Background Art

An ABS resin has been widely used in various applications, such as automobiles, electrical household appliances, and OA apparatus, since it is excellent in terms of mechanical properties, heat resistance, and formability.
In the case where a part formed of an ABS resin is used for automotive interiors, for example, sunlight reflected on the surface of a molded article may duzzle drivers. Moreover, light reflected in the vicinity of measuring instruments may degrade the viewability of the measuring instruments. Therefore, there has been a demand for appearance excellent in terms of matte property from a safety viewpoint.
Casings and chassis for electrical household appliances, OA apparatus, and the like are required to have an appearance excellent in terms of matte property in order to achieve exclusive-looking graphical design.
It is known that a thermoplastic resin molded article excellent in terms of matte property, impact resistance, heat resistance, dimensional stability, and formability can be produced by mixing a specific resin composition including a crosslinked copolymer rubber with a polycarbonate resin or with a resin composition including a polycarbonate resin and an ABS resin (PTL 1).
However, a resin composition capable of forming a molded article having a consistent appearance excellent in terms of matte property has not been provided.
PTL 1: JP 2009-256551 A

Summary of Invention

A main object of the present invention is to provide a thermoplastic resin composition capable of forming a molded article having a consistent appearance excellent in terms of matte property and a molded article formed of the thermoplastic resin composition.

Solution to Problem

The inventors of the present invention made the present invention as described below.

[1] A thermoplastic resin composition comprising a vinyl graft polymer (A), a vinyl non-graft polymer (B), and a matting agent (C), wherein a mass ratio (Q1)/(Q2) of a vinyl resin component (Q1) of a chloroform soluble component (Q) of the thermoplastic resin composition, the vinyl resin component (Q1) having a weight-average molecular weight of less than 1,000,000, to a vinyl resin component (Q2) of the chloroform soluble component (Q), the vinyl resin component (Q2) having a weight-average molecular weight of 1,000,000 or more, is 99.5/0.5 to 55/45.
[2] The thermoplastic resin composition according to [1], wherein a content of the vinyl graft polymer (A) is 1% to 70% by mass, with a total content of the vinyl graft polymer (A), the vinyl non-graft polymer (B), and the matting agent (C) being 100% by mass.
[3] The thermoplastic resin composition according to [1]or [2], wherein a content of the matting agent (C) is 1% to 30% by mass, with the total content of the vinyl graft polymer (A), the vinyl non-graft polymer (B), and the matting agent (C) being 100% by mass.
[4] The thermoplastic resin composition according to any one of [1]to [3], wherein the matting agent (C) is a polymer matting agent (C1).
[5] The thermoplastic resin composition according to [4], wherein the polymer matting agent (C1) is a resin composition (C2) including a copolymer resin (c1) of acrylonitrile with styrene and/or α-methylstyrene and a component (c2) including an unsaturated nitrile-conjugated diene copolymer rubber, the unsaturated nitrile-conjugated diene copolymer rubber forming crosslinks.
[6] The thermoplastic resin composition according to any one of [1] to [5], further comprising a polycarbonate resin (D).
[7] The thermoplastic resin composition according to [6], wherein a content of the polycarbonate resin (D) is 30% to 400% by mass, with the total content of the vinyl graft polymer (A), the vinyl non-graft polymer (B), and the matting agent (C) being 100% by mass.
[8] The thermoplastic resin composition according to any one of [1]to [7], wherein the vinyl graft polymer (A) includes an ethylene-α-olefin rubbery polymer (a1).
[9] A molded article formed of the thermoplastic resin composition according to any one of [1] to [8].

Advantageous Effects of Invention

The thermoplastic resin composition according to the present invention enables a molded article having a consistent appearance excellent in terms of matte property to be provided.

In particular, when the vinyl graft polymer (A) included in the thermoplastic resin composition according to the present invention includes an ethylene-α-olefin rubbery polymer, it becomes possible to provide a molded article that has an appearance excellent in terms of matte property and is capable of markedly reducing creaking noises emitted when the molded article comes into contact with and rubs against another member. It is considered that the above creaking noise reduction effect can be maintained even in the case where the molded article is placed at high temperatures for a long period of time. Thus, the above molded article can be suitably used as a contact part.

Brief Description of Drawings

[Fig. 1] Fig. 1 is a diagram illustrating the stick-slip phenomenon.
[Fig. 2] Figs. 2a, 2b, 2c, and 2d are diagrams illustrating models of the stick-slip phenomenon.
[Fig. 3] Fig. 3 is a schematic cross-sectional view illustrating an example of the mode in which parts are arranged in contact with each other.
[Fig. 4] Fig. 4 is a schematic cross-sectional view illustrating another example of the contact mode.
[Fig. 5] Fig. 5 is a schematic cross-sectional view illustrating another example of the contact mode.
[Fig. 6] Fig. 6 is a schematic cross-sectional view illustrating another example of the contact mode.
[Fig. 7] Fig. 7 is a schematic cross-sectional view illustrating another example of the contact mode.
[Fig. 8] Fig. 8 is a schematic cross-sectional view illustrating another example of the contact mode.
[Fig. 9] Figs. 9A, 9B, and 9C are schematic diagrams illustrating another contact mode, where Fig. 9A is a plan view, Fig. 9B is a side view, and Fig. 9C is a cross-sectional view taken along the line C-C in Fig. 9A.
[Fig. 10] Fig. 10 is a schematic perspective view illustrating a part 20 illustrated in Fig. 9.
[Fig. 11] Figs. 11A, 11B, and 11C are schematic diagrams illustrating another contact mode, where Fig. 11A is a plan view, Fig. 11B is a side view, and Fig. 11C is a cross-sectional view taken along the line C-C in Fig. 11A.
[Fig. 12] Figs. 12A, 12B, and 12C are schematic diagrams illustrating another contact mode, where Fig. 12A is a plan view, Fig. 12B is a side view, and Fig. 12C is a cross-sectional view taken along the line C-C in Fig. 12A.
[Fig. 13] Fig. 13 is a schematic perspective view of a part used in the other contact mode illustrated in Fig. 14.
[Fig. 14] Figs. 14A, 14B, and 14C are schematic diagrams illustrating another contact mode, where Fig. 14A is a bottom view, Fig. 14B is a cross-sectional view taken along the line B-B in Fig. 14A, and Fig. 14C is a cross-sectional view taken along the line C-C in Fig. 14A. Description of Embodiments

Details of a thermoplastic resin composition and a molded article according to an embodiment of the present invention are described below.

The term "polymer" used herein refers to a homopolymer and a copolymer.

The term "(meth)acryl" used herein refers to acryl and/or methacryl.

The term "(meth)acrylate" used herein refers to acrylate and/or methacrylate.

[Thermoplastic Resin Composition]

A thermoplastic resin composition according to the present invention (hereinafter, may be referred to as "thermoplastic resin composition (X) according to the present invention") is a thermoplastic resin composition that includes a vinyl graft polymer (A) (hereinafter, may be referred to as "component (A)"), a vinyl non-graft polymer (B) (hereinafter, may be referred to as "component (B)"), and a matting agent (C) (hereinafter, may be referred to as "component (C)"). The mass ratio (Q1)/(Q2) of a vinyl resin component (Q1) of a chloroform soluble component (Q) of the thermoplastic resin composition, the vinyl resin component (Q1) having a weight-average molecular weight (Mw) of less than 1,000,000, to a vinyl resin component (Q2) (hereinafter, may be referred to as "ultrahigh-molecular-weight component (Q2)") of the chloroform soluble component (Q) which has a weight-average molecular weight (Mw) of 1,000,000 or more is 99.5/0.5 to 55/45. That is, the proportion of the ultrahigh-molecular-weight component (Q2) in the chloroform soluble component (Q) is 0.5% to 45% by mass.

<Proportion of Ultrahigh-Molecular-Weight Component (Q2) in Chloroform Soluble Component (Q)>

The chloroform soluble component (Q) of the thermoplastic resin composition is a soluble component obtained by charging a predetermined amount of sample into chloroform, shaking the resulting mixture for 2 hours with a shaker at 25°C, and centrifuging the mixture for 60 minutes with a centrifugal separation apparatus (rotation speed: 23,000 rpm) at 5°C in order to separate insoluble and soluble components from each other.

The proportion of the ultrahigh-molecular-weight component (Q2) in the chloroform soluble component (Q) of the thermoplastic resin composition (X) according to the present invention can be determined by calculating the proportion of the amount of the component having an Mw of 1,000,000 or more to the total amount of the free copolymer components included in the vinyl graft polymer (A) and the other graft polymers used in the production of the thermoplastic resin composition, and the vinyl non-graft polymer (B) and the other non-graft polymers used in the production of the thermoplastic resin composition. Since a component having a Mw of more than 1,000,000 commonly has a limiting viscosity of 1.5 dl/g or more as described below, a component having a limiting viscosity of 1.5 dl/g or more can be considered as an ultrahigh-molecular-weight component (Q2) and the proportion of such components is calculated.

Since such an ultrahigh-molecular-weight component is insoluble in acetone, the proportion of the ultrahigh-molecular-weight vinyl resin component (Q2) may be calculated by reprecipitating the chloroform soluble component with acetone and then performing centrifugation for 60 minutes with a centrifugal separation apparatus (rotation speed: 23,000 rpm) at 5°C. However, in the case where the thermoplastic resin composition (X) includes the polycarbonate resin (D) described below, the polycarbonate resin (D) is included in the component reprecipitated with acetone. Therefore, in such a case, the amount of the polycarbonate resin (D) may be subtracted by determining the proportion of the polycarbonate resin (D) by pyrolysis gas chromatography and infrared spectroscopy. The same applies to the cases where chloroform soluble components other than the vinyl resin component are included.

When the proportion of the ultrahigh-molecular-weight component (Q2) in the chloroform soluble component (Q) of the thermoplastic resin composition (X) according to the present invention is 0.5% to 45% by mass, the gloss of a crimped surface can be reduced and a suitable matte property is achieved. Furthermore, inconsistency in the gloss of the surface of a molded article do not occur. Thus, a molded article having a consistent high-quality appearance can be produced.

The upper limit for the proportion of the ultrahigh-molecular-weight component (Q2) in the chloroform soluble component (Q) of the thermoplastic resin composition (X) according to the present invention is preferably 25% by mass, is more preferably 15% by mass, is further preferably 10% by mass, is particularly preferably 5% by mass, and is most preferably 3% by mass.

The lower limit for the proportion of the ultrahigh-molecular-weight component (Q2) in the chloroform soluble component (Q) of the thermoplastic resin composition (X) according to the present invention is preferably 1% by mass, is more preferably 1.5% by mass, and is further preferably 2% by mass.

The Mw of the ultrahigh-molecular-weight component (Q2) is preferably 1,500,000 or more and is more preferably 2,000,000 or more in order to produce the advantageous effects of the ultrahigh-molecular-weight component (Q2) with effect. However, an ultrahigh-molecular-weight component (Q2) having an excessively high molecular weight may cause poor dispersion. Accordingly, the Mw of the ultrahigh-molecular-weight component (Q2) is preferably 8,000,000 or less and is particularly preferably 7,000,000 or less.

The weight-average molecular weight (Mw) of the vinyl resin component (Q1) of the chloroform soluble component (Q), which has a Mw of less than 1,000,000 and is other than the ultrahigh-molecular-weight component (Q2), is preferably, but not limited to, 50,000 or more in consideration of material strength and is preferably 500,000 or less in consideration of workability resulting from flowability.

In the present invention, the weight-average molecular weight (Mw) of the chloroform soluble component (Q) is measured by a standard PS (polystyrene) conversion method using GPC (gel permeation chromatography, solvent: THF or chloroform).

Alternatively, the molecular weight of the chloroform soluble component (Q) can be expressed using limiting viscosity [η]. The limiting viscosity of the ultrahigh-molecular-weight component (Q2) having a Mw of 1,000,000 or more is 1.5 dl/g or more. The limiting viscosity of the ultrahigh-molecular-weight component (Q2) is preferably 1.6 to 4.5 dl/g and is particularly preferably 1.8 to 4.0 dl/g.

The limiting viscosity of the chloroform soluble component (Q) can be measured as in the measurement of the limiting viscosity [η] of the chloroform soluble component of the component (A) and the measurement of the limiting viscosity [η] of the component (B), which are described below.

<Component (A): Vinyl Graft Polymer (A) and Component (B): Vinyl Non-Graft Polymer (B)>

The vinyl graft polymer (A) is a composition that includes a rubbery polymer portion and a polymer portion (graft portion) including one or more structural units derived from a vinyl compound (hereinafter, such a structural unit may be referred to simply as "unit"), the polymer portion being graft-bonded to the rubbery polymer portion. Whether the polymer portion is graft-bonded to the rubbery polymer portion can be determined by, for example, measuring the graft ratio described below, using a publicly known ozonolysis method, or inspecting morphology with an electron microscope.

The vinyl graft polymer (A) preferably includes a vinyl graft polymer (A1) including an ethylene-$\alpha$-olefin rubbery polymer (a1) and a structural unit derived from an aromatic vinyl compound in order to impart an excellent matte property and an excellent creaking noise reduction effect to a molded article formed of the thermoplastic resin composition (X) according to the present invention. The polymer portion constituting the graft portion of the vinyl graft copolymer (A1) may include, in addition to the structural unit derived from an aromatic vinyl compound, a structural unit derived from another vinyl compound which is copolymerizable with an aromatic vinyl compound.

The vinyl graft polymer (A1) can be obtained by, for example, producing a rubber-reinforced aromatic vinyl resin (P1) (hereinafter, may be referred to as "component (P1)") by graft polymerization of a vinyl monomer (b1) including an aromatic vinyl compound (hereinafter, may be referred to as "component (b1)") in the presence of the ethylene-$\alpha$-olefin rubbery polymer (a1) (hereinafter, may be referred to as "component (a1)"). The mass ratio between the components (a1) and (b1) is commonly components (a1):(b1) = 5 to 80:95 to 20 and is preferably 10 to 75:90 to 25 in consideration of the productivity of the component (P1) and the impact resistance, appearance, etc. of the molded article.

The rubber-reinforced aromatic vinyl resin (P1) is commonly a composition that includes the vinyl graft polymer (A1) formed by graft polymerization of a polymer including a structural unit derived from the vinyl monomer (b1) to the ethylene-$\alpha$-olefin rubbery polymer (a1) and a free polymer (B1) composed of a polymer including a structural unit derived from the vinyl monomer (b1) which is not grafted to the ethylene-$\alpha$-olefin rubbery polymer (a1) (this free polymer (B1) corresponds to the chloroform soluble component (Q)). The rubber-reinforced aromatic vinyl resin (P1) may further include the ethylene-$\alpha$-olefin rubbery polymer (a1) to which the above polymer is not grafted.

The vinyl graft polymer (A) may include a vinyl graft polymer (A2) including a diene rubbery polymer (a2) and a structural unit derived from an aromatic vinyl compound and may include the vinyl graft polymer (A2) in addition to the above-described vinyl graft polymer (A1). The polymer portion constituting the graft portion of the vinyl graft copolymer (A2) may include, in addition to the structural unit derived from an aromatic vinyl compound, a structural unit derived from another vinyl compound which is copolymerizable with an aromatic vinyl compound.

The vinyl graft polymer (A2) can be obtained by, for example, producing a rubber-reinforced aromatic vinyl resin (P2) (hereinafter, may be referred to as "component (P2)") by graft polymerization of a vinyl monomer (b2) including an aromatic vinyl compound (hereinafter, may be referred to as "component (b2)") in the presence of the diene rubbery polymer (a2) (hereinafter, may be referred to as "component (a2)"). The mass ratio between the components (a2) and (b2) is commonly components (a2):(b2) = 5 to 80:95 to 20 and is preferably 10 to 75:90 to 25 in consideration of the productivity of the component (P2) and the impact resistance, appearance, etc. of the molded article.

The rubber-reinforced aromatic vinyl resin (P2) is commonly a composition that includes the vinyl graft polymer (A2) formed by graft polymerization of a polymer including a structural unit derived from the vinyl monomer (b2) to the diene rubbery polymer (a2) and a free polymer (B2) composed of a polymer including a structural unit derived from the vinyl monomer (b2) which is not grafted to the diene rubbery polymer (a2) (this free polymer (B2) corresponds to the chloroform soluble component (Q)). The rubber-reinforced aromatic vinyl resin (P2) may further include the diene rubbery polymer (a2) to which the above polymer is not grafted.

The vinyl graft polymer (A) preferably has a Tm (melting point). The Tm of the vinyl graft polymer (A) which is measured in accordance with JIS K 7121-1987 is preferably 0°C to 100°C, is more preferably 0°C to 90°C, is further preferably 10°C to 80°C, and is particularly preferably 20°C to 80°C.

The Tm (melting point) is the temperature determined by measuring an endothermic change at a constant heating rate of 20°C per minute using a DSC (differential scanning calorimeter) and reading the peak temperature of the resulting endothermic pattern. Details of the measuring method are described in JIS K 7121-1987.

The Tm of the vinyl graft polymer (A) is preferably 0°C to 100°C in order to further increase the creaking noise reduction effect. The existence of the melting point of the vinyl graft polymer (A) means the presence of a crystalline portion in the component (A). It is considered that, when a crystalline portion is present in the component (A), the occurrence of the stick-slip phenomenon can be reduced and, consequently, the occurrence of the creaking noises can be reduced. When the vinyl graft polymer (A) has a Tm within a range of 0°C to 100°C, the vinyl graft polymer (A) may have another Tm in a temperature range excluding a range of 0°C to 100°C. The vinyl graft polymer (A) may have a plurality of Tm's in a range of 0°C to 100°C.

The vinyl non-graft polymer (B) is a polymer that includes a structural unit derived from a vinyl compound and preferably includes a structural unit derived from an aromatic vinyl compound. The vinyl non-graft polymer (B) does not include a rubbery polymer. The vinyl non-graft polymer (B) may include, in addition to the structural unit derived from an aromatic vinyl compound, a structural unit derived from another vinyl compound which is copolymerizable with an aromatic vinyl compound.

The vinyl non-graft polymer (B) is typically a polymer (B3) produced by polymerizing a vinyl monomer (b3) including an aromatic vinyl compound in the absence of a rubbery polymer. This polymer corresponds to the chloroform soluble component (Q).

In the present invention, free polymers included in the vinyl graft polymer (A), such as the free polymer (B1) included in the rubber-reinforced aromatic vinyl resin (P1) and the free polymer (B2) included in the rubber-reinforced aromatic vinyl resin (P2), are included in the vinyl non-graft polymer (B).

When the vinyl graft polymer (A) includes the vinyl graft polymer (A1), which includes the ethylene-$\alpha$-olefin rubbery polymer (a1) as a rubber component, creaking noises do not occur even after a long period of heat aging and an excellent creaking noise reduction performance can be achieved.

The ethylene-$\alpha$-olefin rubbery polymer (a1) preferably has a Tm (melting point). The Tm of the ethylene-$\alpha$-olefin rubbery polymer (a1) which is measured in accordance with JIS K 7121-1987 is preferably 0°C to 100°C, is more preferably 0°C to 90°C, is further preferably 10°C to 80°C, and is particularly preferably 20°C to 80°C.

The melting point of the component (a1) is preferably 0°C to 100°C in order to further increase the creaking noise reduction effect. The melting point of the component (a1) can be measured as in the measurement of the Tm (melting point) of the vinyl graft polymer (A). When the ethylene-$\alpha$-olefin rubbery polymer (a1) has a Tm in a range of 0°C to 100°C, the ethylene-$\alpha$-olefin rubbery polymer (a1) may have another Tm in a temperature range excluding a range of 0°C to 100°C. The ethylene-$\alpha$-olefin rubbery polymer (a1) may have a plurality of Tm's in a range of 0°C to 100°C.

The glass-transition temperature (Tg) of the ethylene-$\alpha$-olefin rubbery polymer (a1) is preferably -20°C or less, is more preferably -30°C or less, and is particularly preferably -40°C or less in consideration of impact resistance.

The above glass-transition temperature can be determined in accordance with JIS K 7121-1987 using a DSC (differential scanning calorimeter) as in the measurement of Tm (melting point).

The Mooney viscosity (ML1+4,100°C; in accordance with JIS K 6300) of the ethylene-$\alpha$-olefin rubbery polymer (a1) is commonly 5 to 80, is preferably 5 to 40, and is more preferably 5 to 35 in consideration of the flowability of the rubber-reinforced aromatic vinyl resin (P1) and the impact resistance of the molded article.

Examples of the $\alpha$-olefin constituting the ethylene-$\alpha$-olefin rubbery polymer (a1) include an $\alpha$-olefin including 3 to 20 carbon atoms. Specific examples thereof include propylene, 1-butene, 1-pentene, 1-hexene, 4-methyl-1-pentene, 1-heptene, 1-octene, 1-decene, 1-dodecene, 1-hexadecene, and 1-eicosene. The above $\alpha$-olefins may be used alone or in combination of two or more. The number of carbon atoms included in the $\alpha$-olefin is preferably 3 to 20, is more preferably 3 to 12, and is further preferably 3 to 8 in consideration of copolymerizability and the surface appearance of the molded article.

The mass ratio between ethylene units and $\alpha$-olefin units included in the ethylene-$\alpha$-olefin rubbery polymer (a1) is commonly ethylene unit:$\alpha$-olefin unit = 5 to 95:95 to 5, is preferably 50 to 95:50 to 5, and is more preferably 60 to 95:40 to 5 in consideration of the impact resistance of the contact part.

The ethylene-$\alpha$-olefin rubbery polymer (a1) may be an ethylene-$\alpha$-olefin-non-conjugated diene copolymer including a non-conjugated diene unit. Examples of the non-conjugated diene include alkenylnorbornenes, cyclic dienes, and aliphatic dienes. The non-conjugated diene is preferably 5-ethylidene-2-norbornene or dicyclopentadiene. The above non-conjugated dienes can be used alone or in a mixture of two or more.

The proportion of the amount of the non-conjugated diene unit to the total amount of the component (a1) is commonly 0% to 10% by mass, is preferably 0% to 5% by mass, and is more preferably 0% to 3% by mass in order to achieve a sufficient creaking noise reduction effect. If the content of the non-conjugated diene unit in the component (a1) is increased, the crystallinity of the ethylene-$\alpha$-olefin rubbery polymer (a1) may be reduced and, consequently, the melting point (Tm) of the ethylene-$\alpha$-olefin rubbery polymer (a1) may be lost. In such a case, a sufficient creaking noise reduction effect may fail to be achieved.

The ethylene-$\alpha$-olefin rubbery polymer (a1) is preferably an ethylene-$\alpha$-olefin copolymer that does not include the non-conjugated diene component in order to reduce the creaking noises. Among such ethylene-$\alpha$-olefin rubbery polymers (a1), an ethylene-propylene copolymer, an ethylene-1-butene copolymer, and an ethylene-1-octene copolymer are further preferable, and an ethylene-propylene copolymer is particularly preferable.

The ethylene-$\alpha$-olefin rubbery polymers (a1), which serve as a rubber component of the vinyl graft polymer (A1), may be used alone or in a mixture of two or more.

Examples of the diene rubbery polymer (a2), which serves as a rubber component of the vinyl graft polymer (A2), include homopolymers, such as polybutadiene and polyisoprene; butadiene copolymers, such as a styrene-butadiene copolymer, a styrene-butadiene-styrene copolymer, an acrylonitrile-styrene-butadiene copolymer, and an acrylonitrile-butadiene copolymer; and isoprene copolymers, such as a styrene-isoprene copolymer, a styrene-isoprene-styrene copolymer, and an acrylonitrile-styrene-isoprene copolymer. The above copolymers may be either a random or block copolymer. The above polymers may be used alone or in combination of two or more. The diene rubbery polymer (a2) may be either a crosslinked or non-crosslinked polymer.

The vinyl monomers (b1), (b2), and (b3) used for producing the vinyl graft polymers (A1) and (A2) and the vinyl non-graft polymer (B), respectively, preferably include an aromatic vinyl compound as an essential component. It is more preferable to use at least one selected from a vinyl cyanide compound and a (meth)acrylic acid ester compound in addition to the aromatic vinyl compound. Optionally, another vinyl monomer copolymerizable with the above compounds can be further used as needed. Examples of the other vinyl monomer include a maleimide compound, an unsaturated acid anhydride, a carboxyl group-containing unsaturated compound, a hydroxyl group-containing unsaturated compound, and an oxazoline group-containing unsaturated compound. The above vinyl monomers may be used alone or in combination of two or more.

Specific examples of the aromatic vinyl compound include styrene, α-methylstyrene, o-methylstyrene, p-methylstyrene, β-methylstyrene, ethylstyrene, p-tert-butylstyrene, vinyltoluene, vinylxylene, and vinylnaphthalene. The above compounds may be used alone or in combination of two or more. Among these, styrene and α-methylstyrene are preferable, and styrene is particularly preferable.

Specific examples of the vinyl cyanide compound include acrylonitrile, methacrylonitrile, ethacrylonitrile, α-ethyl acrylonitrile, and α-isopropyl acrylonitrile. The above compounds may be used alone or in combination of two or more. Among these, acrylonitrile is preferable.

Specific examples of the (meth)acrylic acid ester compound include methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, hexyl (meth)acrylate, n-octyl (meth)acrylate, 2-ethylhexyl (meth)acrylate, cyclohexyl (meth)acrylate, phenyl (meth)acrylate, and benzyl (meth)acrylate. The above compounds may be used alone or in combination of two or more. Among these, methyl methacrylate is preferable.

Specific examples of the maleimide compound include N-phenylmaleimide and N-cyclohexylmaleimide. The above compounds may be used alone or in combination of two or more.

Specific examples of the unsaturated acid anhydride include maleic anhydride, itaconic anhydride, and citraconic anhydride. The above compounds may be used alone or in combination of two or more.

Specific examples of the carboxyl group-containing unsaturated compound include a (meth)acrylic acid, (eth)acrylic acid, maleic acid, fumaric acid, itaconic acid, crotonic acid, and cinnamic acid. The above compounds may be used alone or in combination of two or more.

Specific examples of the hydroxyl group-containing unsaturated compound include 3-hydroxy-1-propene, 4-hydroxy-1-butene, cis-4-hydroxy-2-butene, trans-4-hydroxy-2-butene, 3-hydroxy-2-methyl-1-propene, 2-hydroxyethyl (meth)acrylate, 2-hydroxypropyl (meth)acrylate, and 3-hydroxypropyl (meth)acrylate. The above compounds may be used alone or in combination of two or more.

The lower limits for the contents of the aromatic vinyl compound in the vinyl monomers (b1), (b2), and (b3) are preferably 40% by mass or more, are more preferably 50% by mass or more, and are further preferably 60% by mass or more, with the total amounts of the vinyl monomers (b1), (b2), and (b3) being 100% by mass. The upper limits are commonly 100% by mass.

In the case where the vinyl monomer (b1), (b2), or (b3) includes the aromatic vinyl compound and the vinyl cyanide compound, the contents of the aromatic vinyl compound and the vinyl cyanide compound are commonly 40% to 90% by mass and 10% to 60% by mass, respectively, and are preferably 55% to 85% by mass and 15% to 45% by mass, respectively, with the total content of the aromatic vinyl compound and the vinyl cyanide compound being 100% by mass, in consideration of formability and the heat resistance, chemical resistance, and mechanical strength of the molded article.

The methods for producing the rubber-reinforced aromatic vinyl resins (P1) and (P2) are not limited; publicly known methods may be used. As a polymerization method, emulsion polymerization, suspension polymerization, solution polymerization, bulk polymerization, and a polymerization method in which the above methods are used in combination with one another can be used. In the above polymerization methods, an appropriate polymerization initiator, an appropriate chain-transfer agent (molecular weight modifier), an appropriate emulsifier, or the like can be used as needed.

The graft ratio of the vinyl graft polymer (A) included in, for example, the rubber-reinforced aromatic vinyl resin (P1) or (P2), is commonly 10% to 150%, is preferably 15% to 120%, is more preferably 20% to 100%, and is particularly preferably 30% to 80%. The graft ratio of the component (A) preferably falls within the above range in order to further enhance the formability of the thermoplastic resin composition (X) and the impact resistance of the molded article.

The graft ratio of the component (A) can be calculated using Formula (1) below.

$$\text{Graft ratio (mass\%)} = ((S-T)/T) \times 100 \qquad (1)$$

In Formula (1), S represents the mass (g) of an insoluble component obtained by charging 1 g of the component (A) into 20 ml of acetone, shaking the resulting mixture for 2 hours with a shaker at 25°C, and centrifuging the mixture for 60 minutes with a centrifugal separation apparatus (rotation speed: 23,000 rpm) at 5°C in order to separate insoluble and soluble components from each other; and T represents the mass (g) of a rubbery polymer included in 1 g of the component (A). The mass of the rubbery polymer can be determined on the basis of, for example, polymerization formulation and polymerization conversion ratio or by infrared absorption spectrum (IR), pyrolysis gas chromatography, CHN elemental analysis, and the like.

The graft ratio can be adjusted by, for example, appropriately selecting the type and amount of the chain-transfer agent used in the production of the rubber-reinforced aromatic vinyl resins (P1) and (P2), the type and amount of the polymerization initiator used, the method with which the monomer components are added in the polymerization, the amount of time during which the monomer components are added in the polymerization, the polymerization temperature, and the like.

The limiting viscosity [η] (in methyl ethyl ketone, at 30°C) of an acetone-soluble component of the component (A) which is other than the ultrahigh-molecular-weight vinyl resin component (Q2) is commonly 0.1 to 1.5 dl/g, is preferably 0.15 to 1.2 dl/g, and is more preferably 0.15 to 1.0 dl/g. The limiting viscosity of the acetone-soluble component of the component (A) preferably falls within the above range in order to further enhance the formability of the thermoplastic resin composition (X) according to the present invention and the impact resistance of the molded article.

The limiting viscosity [η] of the acetone- or chloroform-soluble component of the component (A) is measured by the following method.

The acetone- or chloroform-soluble component of the component (A) is dissolved in methyl ethyl ketone to prepare five solutions having different concentrations. The limiting viscosity [η] is calculated on the basis of the results of measurement of the reduced viscosities that correspond to the respective concentrations at 30°C with an Ubbelohde viscometer tube in units of dl/g.

The limiting viscosity [η] of the acetone- or chloroform-soluble component can be adjusted by, for example, appropriately selecting the type and amount of the chain-transfer agent used in the production of the rubber-reinforced aromatic vinyl resins (P1) and (P2), the type and amount of the polymerization initiator used, the method with which the monomer components are added in the polymerization, the amount of time during which the monomer components are added in the polymerization, the polymerization temperature, and the like. The limiting viscosity [η] of the acetone- or chloroform-soluble component may be adjusted by appropriately selecting and adding the component (B3) having a different limiting viscosity [η], which is described below.

As described above, a polymer (component (B3)) produced by polymerizing a vinyl monomer (b3) including an aromatic vinyl compound in the absence of a rubbery polymer may be used as a vinyl non-graft polymer (B), in addition to the above-described free polymers (B1) and (B2) derived from the rubber-reinforced aromatic vinyl resins (P1) and (P2). For producing the component (B3) by polymerization, the polymerization method used in the production of the rubber-reinforced aromatic vinyl resins (P1) and (P2) can be used.

As described above, the vinyl monomer (b3) may be the same as the above-described vinyl monomers (b1) and (b2). The vinyl monomer (b3) preferably includes at least one selected from an aromatic vinyl compound, a vinyl cyanide compound, and a (meth)acrylic acid ester compound.

The limiting viscosity [η] (in methyl ethyl ketone, at 30°C) of the polymer (B3) of the vinyl monomer (b3) which is other than the ultrahigh-molecular-weight vinyl resin component (Q2) is preferably 0.2 to 0.9 dl/g, is more preferably 0.25 to 0.85 dl/g, and is further preferably 0.3 to 0.8 dl/g in consideration of workability and impact resistance.

The limiting viscosity [η] of the component (B3) can be determined by dissolving the component (B3) in methyl ethyl ketone to prepare five solutions having different concentrations and measuring the reduced viscosities of the solutions having the different concentrations at 30°C with an Ubbelohde viscometer tube, as in the measurement of the limiting viscosity of the acetone- or chloroform-soluble component of the component (A).

The components (A) and (B) may include a component modified with an α,β-unsaturated glycidyl ester compound as needed. Addition of a component modified with an α,β-unsaturated glycidyl ester compound markedly increases the matte effect. Examples of the α,β-unsaturated acid glycidyl ester compound include glycidyl acrylate, glycidyl methacrylate, and glycidyl ethacrylate. The above compounds may be used alone or in a mixture of two or more.

The thermoplastic resin composition (X) according to the present invention may include only one type of the component (A) or two or more types of the components (A). Similarly, the thermoplastic resin composition (X) according to the present invention may include only one type of the component (B) or two or more types of the components (B).

The ultrahigh-molecular-weight vinyl resin component (Q2) included in the thermoplastic resin composition (X) according to the present invention is particularly preferably the polymer (B3) of the vinyl monomer (b3) which is included in the component (B).

<Component (C): Matting Agent (C)>

Examples of the matting agent (C) used in the present invention include powdery, granular, amorphous, microballoon-like, fibrous, whisker-like, and microparticle-like inorganic and organic matting agents. Examples of the powdery, granular, and amorphous matting agents include calcium carbonate, talc, silicic acid, a silicic acid salt, asbestos, and mica. Examples of the microballoon-like matting agents include glass balloons and phenolic balloons. Examples of the fibrous matting agents include a glass fiber, a carbon fiber, a metal fiber, and a carbon fiber. Examples of the whisker-like matting agents include ceramic whiskers and titanium whiskers. Examples of microparticle-like matting agents include plastic microparticles, such as microparticles of polyolefins, such as polyethylene and/or polypropylene.

The volume-average particle size of the matting agent (C) is preferably 1 to 50 μm, is more preferably 1 to 40 μm, and is further preferably 1 to 30 μm. Note that the term "volume-average particle size" used herein refers to a harmonic average particle size (diameter) determined on the basis of scattered light intensity. The same applies to the volume-average particle size of the organic matting agent described below.

Examples of the organic matting agent (excluding the components (A) and (B)) include a polymer matting agent (C1). The polymer matting agent (C1) may be any polymer having a matte property. Examples of such a polymer include components such as a crosslinked vinyl polymer, a (crosslinked) rubbery polymer, and a diene rubber-modified copolymer resin, which are other than the component (A) or (B). Examples of the crosslinked vinyl polymer include a crosslinked polyacrylic resin and a crosslinked AS resin. The organic matting agent is preferable since it enables a molded article having an excellent matte appearance to be produced while a certain mechanical strength and a certain degree of workability are maintained. The volume-average particle size of the organic matting agent included in the thermoplastic resin composition (X) is preferably 0.5 to 25 μm, is more preferably 0.5 to 20 μm, and is further preferably 1 to 15 μm. The shape of the organic matting agent may be granular or amorphous, such as amoeboid.

Preferable examples of the polymer matting agent (C1) include a resin composition (C2) that includes a copolymer resin (c1) of acrylonitrile with styrene and/or α-methylstyrene and a component (c2) including an unsaturated nitrile-conjugated diene copolymer rubber, the copolymer rubber forming crosslinks (hereinafter, the resin composition (C2) may be referred to as "component (C2)"). The above resin composition (C2) can be produced by, for example, the method described in Japanese Patent No. 2576863 or the method described in JP 2010-1377 A.

The component (c2) including an unsaturated nitrile-conjugated diene copolymer rubber may include a rubber other than the unsaturated nitrile-conjugated diene copolymer rubber which is capable of forming crosslinks with a crosslinking agent. The content of the other rubber may be determined appropriately; the content of the unsaturated nitrile-conjugated diene copolymer rubber in the component (c2) is 10% to 100% by mass, while the content of the other rubber in the component (c2) is 0% to 90% by mass.

The unsaturated nitrile-conjugated diene copolymer rubber is preferably a copolymer rubber including 10% to 50% by mass unsaturated nitrile and 90% to 50% by mass conjugated diene. Examples of the unsaturated nitrile include acrylonitrile and methacrylonitrile. Examples of the conjugated diene include 1,3-butadiene, 2,3-dimethylbutadiene, isoprene, and 1,3-pentadiene.

A part of the conjugated diene included in the unsaturated nitrile-conjugated diene copolymer rubber may be replaced with another copolymerizable monomer such that the spirit of the present invention is not impaired. Examples of such a monomer include aromatic vinyl compounds, such as styrene and α-methylstyrene; alkyl acrylates, such as methyl acrylate, ethyl acrylate, butyl acrylate, and 2-ethylhexyl acrylate; alkoxy acrylates, such as methoxymethyl acrylate, methoxyethyl acrylate, ethoxyethyl acrylate, butoxyethyl acrylate, and methoxyethoxy ethyl acrylate; unsaturated carboxylic acids, such as an acrylic acid, methacrylic acid, itaconic acid, and maleic acid, and salts of the above unsaturated carboxylic acids, such as an alkali metal salt and an ammonium salt; and (meth)acrylic acid cyano-substituted alkyl esters, such as cyanomethyl (meth)acrylate, 2-cyanoethyl (meth)acrylate, 3-cyanopropyl (meth)acrylate, and 4-cyanobutyl (meth)acrylate. Any monomers other than the above examples which are copolymerizable with the unsaturated nitrile and the conjugated diene may also be used.

Examples of the unsaturated nitrile-conjugated diene copolymer rubber include an acrylonitrile-butadiene copolymer rubber, an acrylonitrile-isoprene copolymer rubber, an acrylonitrile-butadiene-isoprene copolymer rubber, and an acrylonitrile-butadiene-acrylic acid copolymer rubber; and rubbers produced by hydrogenating the conjugated diene units of the above rubbers.

The other rubber that can be used in combination with the unsaturated nitrile-conjugated diene copolymer rubber is a rubber capable of forming crosslinks with a crosslinking agent commonly used in the rubber industry which uses a sulfur vulcanization system, an organic peroxide vulcanization system, or the like. Specific examples thereof include conjugated diene polymer rubbers, such as a polybutadiene rubber, a styrene-butadiene copolymer rubber (random or block), a natural rubber, a polyisoprene rubber, and a polychloroprene rubber, and hydrides thereof; and EPDM.

In the case where the unsaturated nitrile-conjugated diene copolymer rubber is used in combination with the other rubber described above, the proportion of the unsaturated nitrile-conjugated diene copolymer rubber in the mixed rubber is preferably 10% to 100% by mass and is particularly preferably 20% to 100% by mass. If the above proportion is less than 10% by mass, improvement of matte property, which is the advantageous effect of the addition of the unsaturated nitrile-conjugated diene copolymer rubber, may fail to be achieved to a sufficient degree.

In the case where the above mixed rubber is used as a component (c2), two or more types of rubbers may be mixed with one another before they are mixed with the copolymer resin (c1). Alternatively, the above rubbers may be added to the copolymer resin (c1) at the same time or different times.

In the present invention, it is necessary that the component (c2) including a copolymer rubber be crosslinked with a crosslinking agent in the component (C2). The method for crosslinking the component (c2) including a copolymer rubber is particularly preferably a method in which, in the step of mixing the copolymer resin (c1) with the component (c2) including a copolymer rubber, the rubber component is crosslinked in the presence of a crosslinking agent for the rubber component at the same time as they are mixed with each other, that is, a method in which dynamic vulcanization is performed.

Crosslinking using dynamic vulcanization may be performed by, for example, melt-mixing the copolymer resin (c1) with the component (c2) including a copolymer rubber, adding a crosslinking agent for the rubber component to the resulting mixture, and continuing stirring the mixture for a certain amount of time at a certain temperature which are necessary for melting the copolymer resin (c1) and vulcanizing the rubber component. Since the temperature at which mixing needs to be performed and the amount of time during which mixing needs to be performed for vulcanizing the rubber component vary by the type of the rubber component and type of the crosslinking agent, vulcanization conditions may be determined appropriately on the basis of the results of a preliminary test. The above vulcanization treatment is commonly performed at 150°C to 230°C for 5 to 10 minutes.

Polymers that include dispersed rubber particles, such as the rubber-reinforced aromatic vinyl resins (P1) and (P2), may become degraded by heat at the temperatures at which the dynamic vulcanization is performed. Therefore, in the present invention, it is preferable to produce the component (C2) including a vulcanized rubber component by mixing the copolymer resin (c1) with the component (c2) including a copolymer rubber and crosslinking the rubber component by a dynamic vulcanization method while the above dispersed rubber particles are absent, that is, before the component (C2) is mixed with the dispersed rubber particles.

The degree of crosslinking of the rubber component of the component (C2) is preferably such that a gel fraction (the fraction of an insoluble component obtained when the crosslinked rubber component is immersed in methyl ethyl ketone for 48 hours at 25°C; the same applies hereinafter) of 80% or more is achieved.

The rubber component of the component (C2) is desirably dispersed in the thermoplastic resin composition (X) according to the present invention in the form of particles having a size of 10 $\mu$m or less and preferably having a size of 1 to 5 $\mu$m in consideration of matte property and impact resistance.

The crosslinking agent used in the production of the component (C2) is not limited; any crosslinking agent capable of crosslinking the rubber component may be used. Common examples of the crosslinking agent include sulfur vulcanization crosslinking agents, such as sulfur and/or sulfur-donating compounds (e.g., thiuram compounds, such as tetramethylthiuram disulfide and tetramethylthiuram disulfide, and morpholine compounds, such as morpholine disulfide), vulcanization aids (e.g., zinc oxide, magnesium oxide, stearic acid, and zinc stearate), and vulcanization accelerators (e.g., guanidine compounds, such as diphenyl guanidine, and thiazole compounds, such as mercaptobenzothiazole, benzothiazyl disulfide, and cyclohexylbenzothiazylsulfenamide); and organic peroxides, such as dicumyl peroxide, 2,5-dimethyl-2,5-di-(t-butylperoxy)-hexane, 2,5-dimethyl-2,5-di-(t-butylperoxy)-hexyne-3, and 1,3-bis(t-butylperoxy-isopropyl)benzene. The contents of the above crosslinking agents are preferably selected appropriately such that the gel fraction in the crosslinked rubber component is 80% or more.

<Contents of Components in Thermoplastic Resin Composition (X)>

The content of the vinyl graft polymer (A) in the thermoplastic resin composition (X) according to the present invention is preferably 1% to 70% by mass, is more preferably 2% to 60% by mass, is further preferably 3% to 40% by mass, and is particularly preferably 4% to 30% by mass with the total content of the vinyl graft polymer (A), the vinyl non-graft polymer (B), and the matting agent (C) being 100% by mass, in order to reduce the creaking noises.

The content of the matting agent (C) in the thermoplastic resin composition (X) according to the present invention is preferably 1% to 30% by mass, is more preferably 1% to 20% by mass, and is further preferably 1% to 10% by mass with the total content of the vinyl graft polymer (A), the vinyl non-graft polymer (B), and the matting agent (C) being 100% by mass, in consideration of matte property.

The content of the vinyl non-graft polymer (B) in the thermoplastic resin composition (X) according to the present invention is the balance, which can be derived from the contents of the vinyl graft polymer (A) and the matting agent (C).

In the case where the component (A) includes a structural unit derived from an $\alpha,\beta$-unsaturated glycidyl ester compound, in consideration of matte property, the content of the component (A) including the structural unit derived from an $\alpha,\beta$-unsaturated glycidyl ester compound in the thermoplastic resin composition (X) according to the present invention is commonly 35% by mass or less, is preferably 25% by mass or less, and is more preferably 23% by mass or less with the total content of the components (A), (B), and (C) being 100% by mass, in consideration of degradation of the appearance of the molded article. The content of the component (A) including the structural unit derived from an $\alpha,\beta$-unsaturated glycidyl ester compound in the thermoplastic resin composition (X) according to the present invention is commonly 5% or more, is preferably 10% by mass or more, and is more preferably 15% by mass or more in consideration of matte effect.

The content of the ethylene-$\alpha$-olefin rubbery polymer (a1) in the component (A) is preferably 5% to 30% by mass, is more preferably 5% to 25% by mass, and is particularly preferably 5% to 20% by mass with the total content of the vinyl graft polymer (A), the vinyl non-graft polymer (B), and the matting agent (C) being 100% by mass, in consideration of the creaking noise reduction effect and impact resistance.

In the case where the component (A) includes the ethylene-α-olefin rubbery polymer (a1) and the diene rubbery polymer (a2) and importance is placed on impact resistance while a certain creaking noise reduction effect is maintained, the mass ratio of the components (a1):(a2) included in the thermoplastic resin composition (X) according to the present invention is preferably 5 to 80:95 to 20, is more preferably 10 to 70:90 to 30, and is particularly preferably 15 to 60:85 to 40.

\<Other Components\>

The thermoplastic resin composition (X) according to the present invention may include, as needed, various types of additives other than the component (C), such as a filler, a nucleating agent, a lubricant, a heat stabilizer, an antioxidant, an ultraviolet absorber, an age resistor, a plasticizer, an antibacterial agent, and a colorant, such that the objects of the present invention are not impaired.

The thermoplastic resin composition (X) according to the present invention may include, as needed, other resins, that is, resins other than component (A), (B), or (C) according to the present invention, such as a styrene resin, polyethylene, polypropylene, polybutylene terephthalate, polyethylene terephthalate, polyphenylene sulfide, polyamide, and a polycarbonate resin, such that the objects of the present invention are not impaired. Among these, a polycarbonate resin is particularly preferable in terms of impact resistance.

In the case where the thermoplastic resin composition (X) according to the present invention includes a polycarbonate resin (D) (hereinafter, may be referred to as "component (D)"), the content of the polycarbonate resin (D) is commonly 30% to 400% by mass, is preferably 60% to 300% by mass, and is more preferably 75% to 250% by mass with the total content of the components (A), (B), and (C) being 100% by mass.

\<Method for Producing Thermoplastic Resin Composition (X)\>

The thermoplastic resin composition (X) according to the present invention is produced by mixing the vinyl graft polymer (A), the vinyl non-graft polymer (B), the matting agent (C), and the other components used as needed with one another at a predetermined blending ratio and melt-kneading the resulting mixture. Specifically, the thermoplastic resin composition (X) can be produced by mixing the above components with one another with a tumbler mixer, a Henschel mixer, or the like and melt-kneading the resulting mixture with a mixer, such as a single-screw extruder, a twin-screw extruder, a Banbury mixer, a kneader, a roller, or a Feeder Ruder, under appropriate conditions. The kneader is preferably a twin-screw extruder.

For kneading the above components, they may be mixed and kneaded at once or in multiple stages.

After the above mixture has been kneaded with a Banbury mixer, a kneader, or the like, the mixture may be formed into pellets with an extruder.

In the case where a fibrous filler is used, the fibrous filler is preferably fed to the middle of the extruder with a side feeder in order to prevent the filler from being cut during kneading.

The melt-kneading temperature is commonly 200°C to 300°C and is preferably 220°C to 280°C.

\<Noise Risk Number of Thermoplastic Resin Composition (X)\>

The noise risk number of the thermoplastic resin composition (X) according to the present invention which is determined by an evaluation of a contact part formed of the thermoplastic resin composition, which is described below, with a stick-slip tester "SSP-002" produced by ZIEGLER (evaluation conditions: temperature: 23°C, humidity: 50%R.H., load: 5 N and 40 N, speed: 1 mm/sec and 10 mm/sec) is preferably 5 or less and is further preferably 3 or less in order to reduce the creaking noises. According to the standard (VDA203-260) of The German Association of the Automotive Industry, it is considered acceptable in practical applications when the noise risk number is 3 or less. Such a noise risk number can be satisfied by using a component including the ethylene-α-olefin rubbery polymer (a1) as a component (A) according to the present invention and appropriately adjusting the contents of the components (A), (B), and (C) and, as needed, the content of the component (D).

Creaking noises emitted by the stick-slip phenomenon are described below.

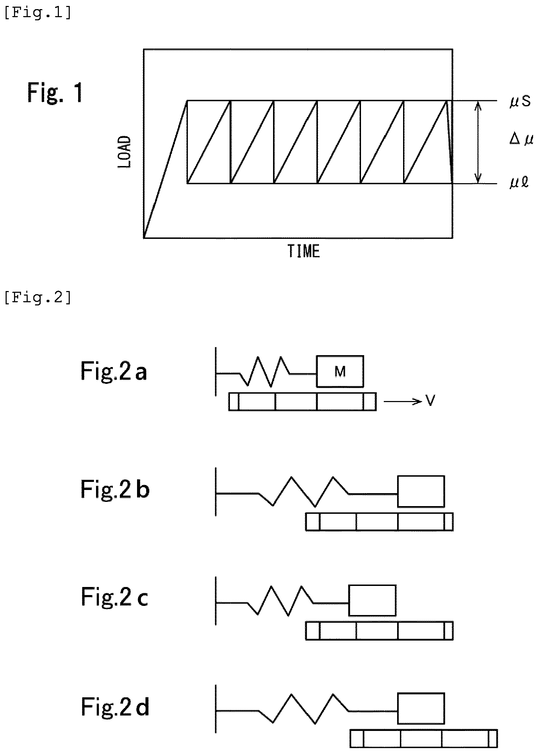

For example, since styrene resins, such as an ABS resin, are amorphous resins, they have a higher coefficient of friction than resins such as polyethylene, polypropylene, and polyacetal, which are crystalline resins. When such resins are used for producing parts that come into contact with, fit into, or rub against another member, such as switch parts included in automotive instrument panels and slider parts included in office desks, the stick-slip phenomenon as illustrated in Fig. 1 may occur and noises (creaking noises) may be emitted.

The stick-slip phenomenon occurs when two objects rub against each other. When an object M fixed in place with a spring is placed on a driving stage travelling at a driving speed V as shown by the model illustrated in Fig. 2a, first, the object M moves rightward together with the stage travelling at a driving speed V due to the action of a static frictional force, as illustrated in Fig. 2b. When the force exerted by the spring which acts to restore the spring becomes equal to the static frictional force, the object M starts slipping in a direction opposite to that of the driving speed V. Since the object M is subjected to a kinetic frictional force while slipping, the object M stops slipping, that is, the object M sticks to the driving stage, at the time illustrated in Fig. 2c where the force exerted by the spring becomes equal to the kinetic frictional force. Then, the object M again moves in the same direction as the driving speed V as illustrated in Fig. 2d.

The above phenomenon is referred to as "stick-slip phenomenon". It is considered that, the larger the difference $\Delta\mu$ between the coefficient $\mu s$ of static friction and the $\mu l$ of the lower end of the sawtooth waveform as illustrated in Fig. 1, the higher the occurrence of the creaking noises.

The coefficient of kinetic friction is an intermediate value between $\mu s$ and $\mu l$. Therefore, even in the case where the absolute value of the coefficient of static friction is small, when $\Delta\mu$ is large, the occurrence of the creaking noises is increased.

Since the creaking noises act as a major cause of degradation of the comfortability and quietness of the insides of vehicles, office, and home, there has been a strong demands for a reduction in the creaking noises.

[Molded Article]

A molded article formed of the thermoplastic resin composition (X) according to the present invention has a consistent appearance excellent in terms of matte property and can be suitably used as, for example, automotive interior parts and casings and chassis for electrical household appliances, OA apparatus, and the like. In particular, a molded article according to the present invention which is produced by using a component (A) including the ethylene-$\alpha$-olefin rubbery polymer (a1) as a component (A) of the thermoplastic resin composition (X) has an excellent creaking noise reduction effect and can be suitably used as a contact part including two members arranged in contact with each other and a structure including such a contact part.

Specifically, when the above molded article is used as at least one of the parts constituting a structure that includes at least two parts arranged in contact with each other, the occurrence of creaking noises in the structure can be reduced.

Thus, according to the present invention, there is provided an item that is a structure including at least two parts arranged in contact with each other, at least one of the parts being a molded article formed of the thermoplastic resin composition (X) according to the present invention (hereinafter, the above item may be referred to as "item according to the present invention"). It is preferable that two or more parts of the item according to the present invention be molded articles formed of the thermoplastic resin composition (X) according to the present invention. It is particularly preferable that all of the parts constituting the item be molded articles formed of the thermoplastic resin composition (X) according to the present invention.

The method for producing the molded article or the parts from the thermoplastic resin composition (X) according to the present invention is not limited. Examples of the production method include publicly known methods such as injecting molding, injection compression molding, gas-assisted molding, press molding, calender molding, T-die extrusion molding, contour extrusion molding, and film molding.

The materials constituting parts of the item according to the present invention which are other than the parts that are molded articles formed of the thermoplastic resin composition (X) according to the present invention are not limited. Examples of the materials include a thermoplastic resin other than the thermoplastic resin composition (X) according to the present invention, a thermosetting resin, a rubber, an organic material, an inorganic material, and a metal material.

Examples of the thermoplastic resin other than the thermoplastic resin composition (X) according to the present invention include polyvinyl chloride, polyethylene, polypropylene, an AS resin, an ABS resin, an AES resin, an ASA resin, polymethyl methacrylate (PMMA), polystyrene, impact-resistant polystyrene, EVA, polyamide (PA), polyethylene terephthalate, polybutylene terephthalate, polycarbonate (PC), polylactic acid, a PA/ABS resin, and a PA/AES resin. The above thermoplastic resins can be used alone or in combination of two or more.

Examples of the thermosetting resin include a phenolic resin, an epoxy resin, a urea resin, a melamine resin, and an unsaturated polyester resin. The above thermosetting resins can be used alone or in combination of two or more.

Examples of the rubber include a chloroprene rubber, a polybutadiene rubber, an ethylene-propylene rubber, synthetic rubbers, such as SEBS, SBS, and SIS, and a natural rubber. The above rubbers can be used alone or in combination of two or more.

Examples of the organic material include an insulation board, an MDF (medium-density fibreboard), a hardboard, a particleboard, a lumber core, an LVL (laminated veneer lumber), an OSB (oriented strand board), a PSL (Parallam), a WB (waferboard), a hard fiberboard, a soft fiberboard, a lumber core plywood, a board core plywood, a special core plywood, a veneer-core veneer board, a laminated paper sheet or board impregnated with a tap resin, a board formed by mixing fine particles or filaments prepared by crushing (waste) paper or the like with an adhesive and heating and compressing the resulting mixture, and various types of lumber. The above organic materials can be used alone or in combination of two or more.

Examples of the inorganic material include a calcium silicate board, a flexible board, a homocement board, a gypsum board, a gypsum sheathing board, a reinforced gypsum board, a gypsum lath board, a decorated gypsum board, a composite gypsum board, various ceramics, and glass. The above inorganic materials can be used alone or in combination of two or more.

Examples of the metal material include iron, aluminum, copper, and various alloys. The above metal materials can be used alone or in combination of two or more.

The term "contact part" used herein refers to an item including at least two parts arranged to come into contact with each other on a regular or intermittent basis, wherein, when an external force, such as a vibration, a torsion, or an impact, is applied to the item, portions of the parts which are in contact with each other slightly move relative to or collide against each other. The contact mode in which the above contact portions are in contact with each other may be any of plane contact, line contact, and point contact. The above parts may be partially bonded to each other.

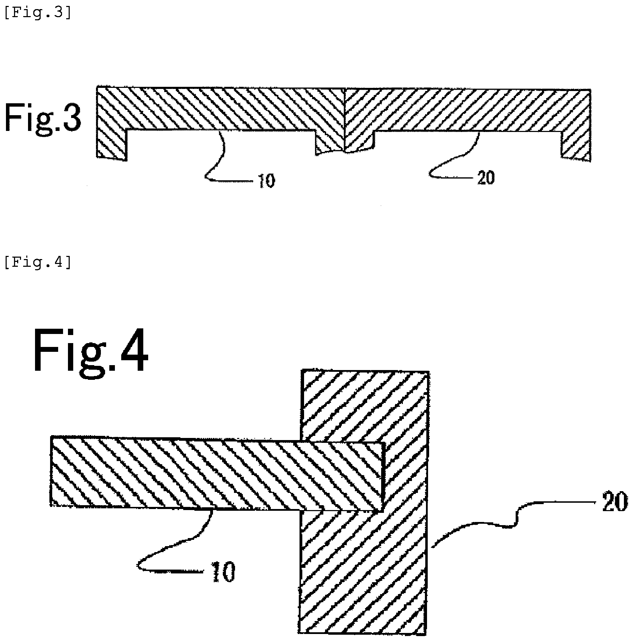

Specific examples thereof include an item including parts 10 and 20 bonded to each other such that a surface of the part 10 and a surface of the part 20 abut against each other as illustrated in Fig. 3; and an item including parts 10 and 20 arranged in contact with each other such that a surface of the part 10 fits in a recess formed in the part 20 as illustrated in Figs. 4 to 8.

Specific examples of the item including parts arranged in contact with each other such that one of the parts fits in the other part include (1) to (4) below.

(1) an item including parts 10 and 20 arranged in contact with each other such that an end of the part 10 precisely fits in a complementary recess formed in the part 20, as illustrated in Fig. 4.

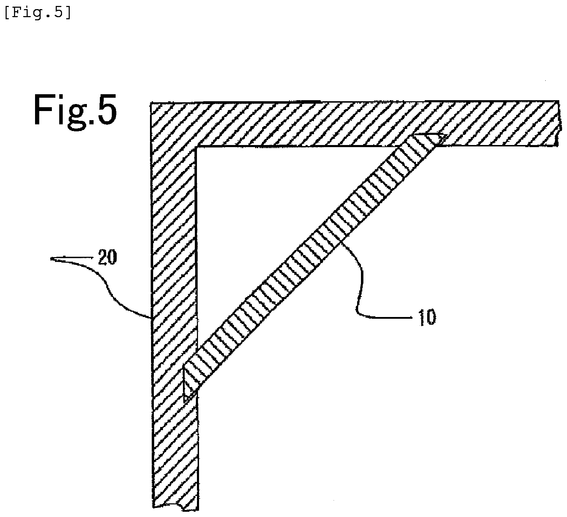

(2) an item including parts 10 and 20 arranged in contact with each other such that both ends of the part 10 precisely fit in respective complementary recesses formed in the part 20 at a corner of the part 20, as illustrated in Fig. 5.

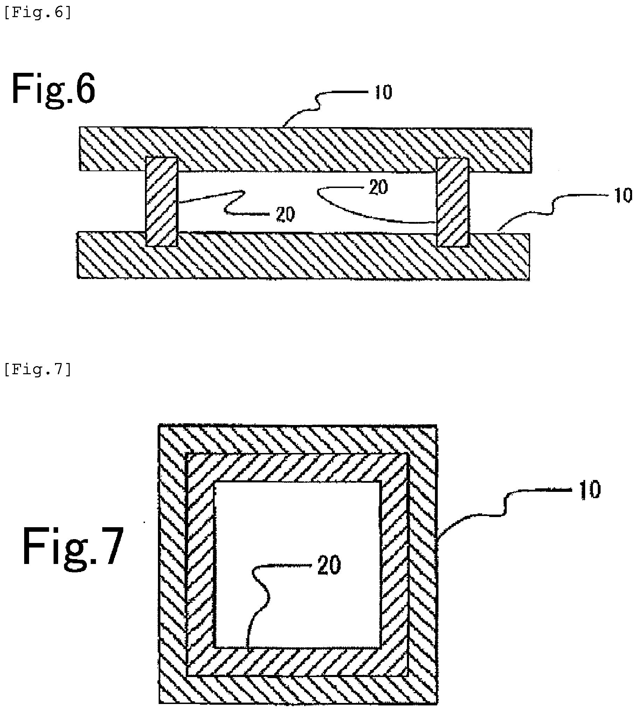

(3) an item including two parts 10 arranged substantially parallel to each other and a part 20 which are arranged in contact with each other such that both ends of the part 20 precisely fit in respective complementary recesses formed in the parts 10, as illustrated in Fig. 6.

(4) an item including parts 10 and 20 arranged in contact with each other, the part 20 including an outer surface having the same dimensions as the inner surface of the part 10, such that the part 20 is inserted in the part 10 in a nesting manner and the inner surface of the part 10 and the outer surface of the part 20 precisely fit to each other, as illustrated in Fig. 7.

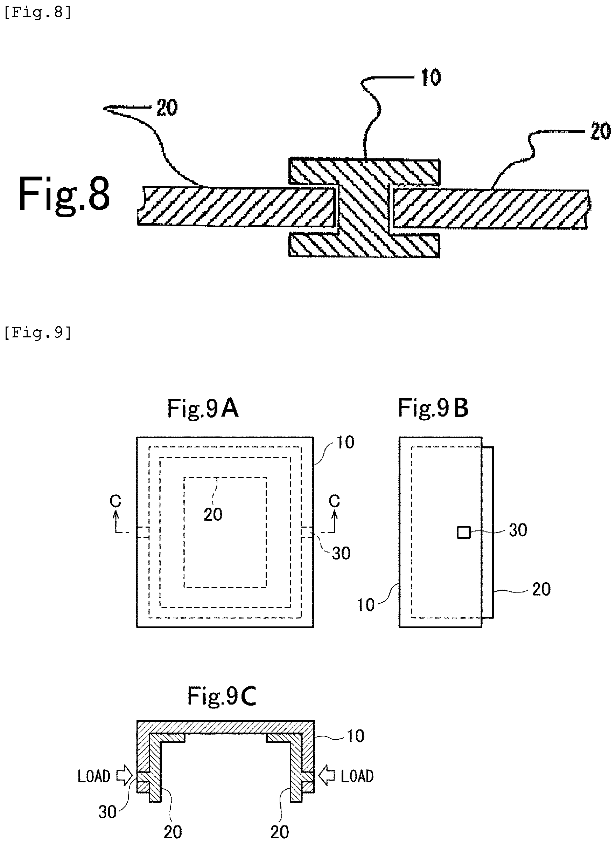

The two parts included in the item according to the present invention are not necessarily arranged to precisely fit to each other. The item according to the present invention may be an item including parts that are arranged to fit to each other with a certain amount of gap or play therebetween as illustrated in Fig. 8 and that repeatedly come into contact with and detach from each other upon an external force, such as a vibration, a torsion, or an impact, being applied to the item.

Examples of an item including the above-described contact portions in a composite manner include the item illustrated in Figs. 9A to 9C. A part 10 included in the item illustrated in Figs. 9A to 9C is a box-like part that is a rectangular parallelepiped with a bottom surface being completely opened. A part 20 is a molded article that has a shape similar to that of the part 10 and has a rectangular opening formed at the center of the upper surface. As illustrated in Figs. 9A to 9C, the part 20 can be fit into the part 10. The outer peripheral surface of the part 20 and the inner peripheral surface of the part 10 come into contact with each other. Upon an external force, such as a vibration, being applied to the parts 10 and 20, they become slightly deformed and repeatedly come into contact with and detach from each other.

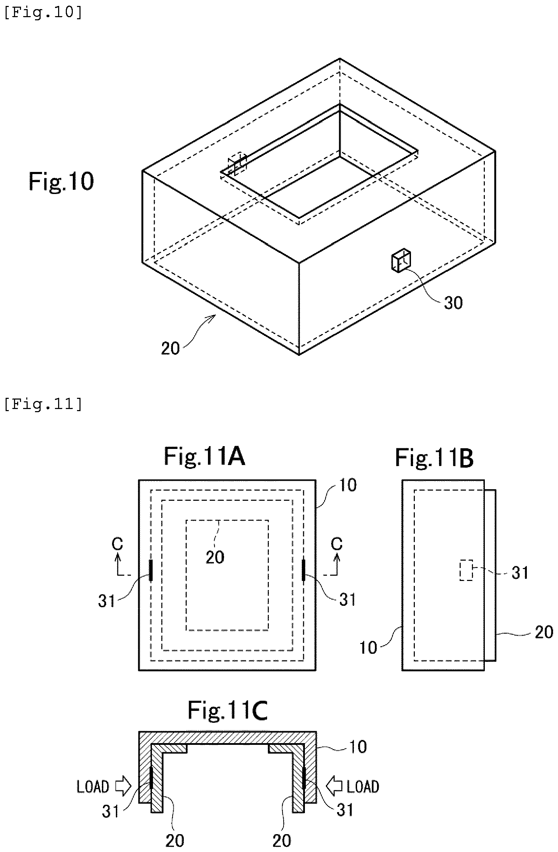

The part 20 includes protrusions 30 formed in two opposing outer faces as illustrated in Fig. 10. The part 10 has holes formed in two opposing side faces, which accommodate the respective protrusions 30 of the part 20, as illustrated in Figs. 9A to 9C. When the part 10 is fit to the part 20, the protrusions 30 fit into the holes by a snap-fit mechanism. This prevents the fit between the parts from being easily broken.

When at least one of the parts 10 and 20 is formed of the thermoplastic resin composition (X) according to the present invention, the occurrence of the creaking noises can be prevented even in the case where, for example, an external force is applied to the parts in the direction of the arrow illustrated in Fig. 9C. The direction of the external force is not limited to the direction illustrated in Fig. 9C. Even in the case where an external force is applied to the parts in another direction, the occurrence of the creaking noises can be prevented when at least one of the parts 10 and 20 is formed of the thermoplastic resin composition (X) according to the present invention. The shape of the cross sections of the protrusions 30 and the shape of the holes formed in the part 10 illustrated in Figs. 9A to 9C may be changed such that the parts 10 and 20 are fit to each other by a press-fit mechanism.

Figs. 11A to 11C illustrate the same item as that illustrated in Figs. 9A to 9C, except that the inner surface of the part 10 and the outer surface of the part 20 are partially bonded to each other with an adhesive 31 instead of forming the protrusions 30 and the holes for snap-fitting in the parts 10 and 20. Alternatively, the parts 10 and 20 may be welded to each other by laser welding or the like instead of using the adhesive 31; this method is advantageous when the parts 10 and 20 are thermoplastic resin molded articles. In particular, in the case where laser welding is used, it is preferable to use a transparent thermoplastic resin transparent to a laser beam in combination with a part formed of a thermoplastic resin which absorbs a laser beam. Specific examples of such products include measuring instruments, such as an on-vehicle speed indicator, and lighting.

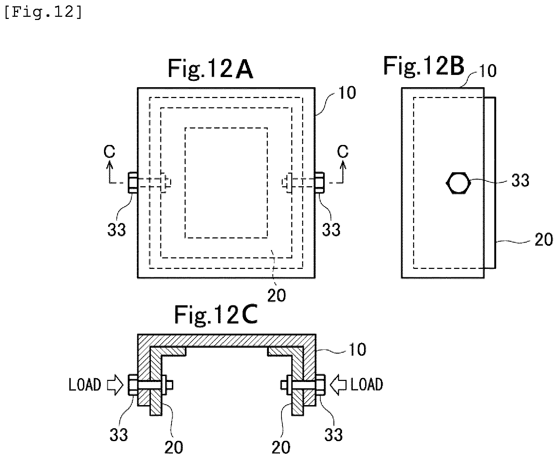

The example illustrated in Figs. 12A to 12C is the same as the item illustrated in Figs. 9A to 9C, except that holes are formed in two opposing side faces of the parts 10 and 20 such that the holes of the part 10 face the respective holes of the part 20 and the parts 10 and 20 are fastened and fixed with bolts and nuts 33 through the two holes. The parts 10 and 20 may be fixed using screws, pins, rivets, bushings, brackets, hinges, nails, or the like instead of bolts and nuts.

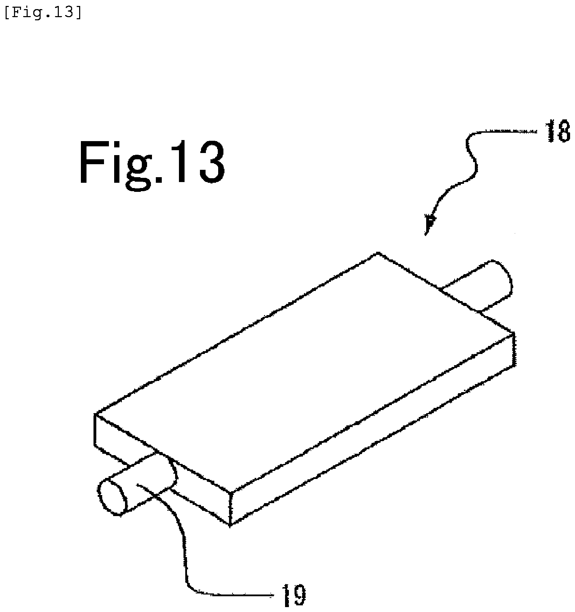

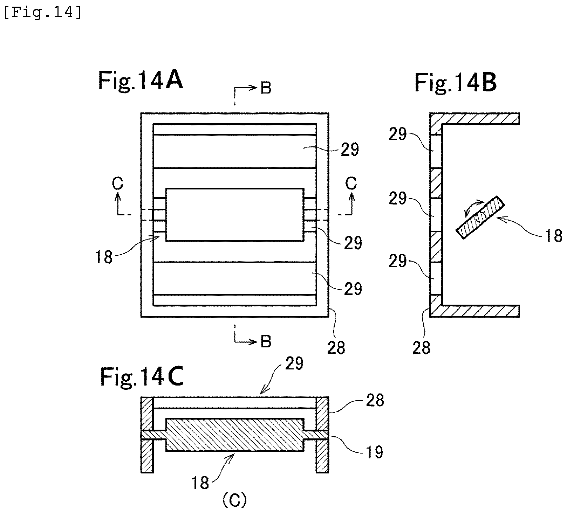

The item illustrated in Figs. 14A to 14C which includes a part 18 including a rectangular plate-like main body and a cylindrical shaft 19 protruded from both ends of the main body outwardly in the longitudinal direction as illustrated in Fig. 13 and a frame-like part 28 in which the shaft 19 of the part 18 is inserted, the part 28 supporting the part 18 such that the part 18 is rotatable about the shaft 19, is also suitably formed using the thermoplastic resin composition (X) according to the present invention. Forming at least one of the parts 18 and 28 using the thermoplastic resin composition (X) according to the present invention reduces the likelihood of creaking noises being emitted when the part 18 is rotated about the shaft 19 or when an external force, such as a vibration, is applied to the item.

In the case where the frame-like part 28 includes a plurality of openings 29 as illustrated in Figs. 14A to 14C, the item can be suitably used as an apparatus capable of adjusting the amount of air flows and the direction in which the air flows by changing the angle of the part 18. Examples of such an apparatus include outlets of a domestic air conditioner, an automotive air conditioner, an air cleaner, a blower, and the like.

Using a molded article formed of the thermoplastic resin composition (X) according to the present invention as at least one of the parts 10, 18, 20, and 28 of the above items can markedly reduce the occurrence of the creaking noises. The other item may also be the molded article formed of the thermoplastic resin composition (X) according to the present invention.

Specific examples of the above-described contact parts and a structure that includes the contact parts include electric or electronic equipment, optical equipment, lighting equipment, office equipment, home appliances, equipment for automotive interiors, and equipment for housing interiors.

Examples of contact parts for electric or electronic equipment and optical equipment include a housing for cameras, such as a digital video camera and a still camera; and a housing for handheld computers, mobile phones, personal digital assistants, and the like.

Examples of contact parts for lighting equipment include a panel, a cover, a connector, and the like for ceiling lights.

Examples of contact parts for office equipment include exterior parts, such as a casing and a housing, interior parts, switch peripheral parts, movable parts, desk lock parts, desk drawers, and paper trays for copying machines.

Examples of contact parts for home appliances include lighting apparatuses, such as a linear LED lamp, a globe LED lamp, and a globe fluorescent lamp; home electric equipment, such as a mobile phone, a tablet terminal, an electric rice cooker, a refrigerator, a microwave oven, a gas cooking stove, a vacuum cleaner, a dish washing machine, an air cleaner, an air conditioner, a heater, a TV, and a recorder; office automation equipment, such as a printer, a FAX, a copying machine, a personal computer, and a projector; acoustic equipment, such as audio equipment, an electronic organ, and an electronic piano; caps for cosmetic containers; casings for battery cells; exterior parts, such as a housing; interior parts; switch peripheral parts; and movable parts.

Examples of contact parts for equipment for automotive interiors include exterior parts for a rearview mirror, a door trim, a door lining, a pillar garnish, a console, a console box, a center panel, a door pocket, a ventilator, a duct, an air conditioner, a meter visor, an instrument panel upper garnish, an instrument panel lower garnish, an A/T indicator, on-off switches (a slide part and a slide plate), a switch bezel, a grill front defroster, a grill side defroster, a lid cluster, a lower instrument cover, masks (e.g., a mask switch and a mask radio), a glove box, pockets (e.g., a pocket deck and a pocket card), a steering wheel horn pad, a switch part, a car navigation systems, and the like.

Examples of contact parts for equipment for housing interiors include a shelf door, a chair damper, a movable part for foldable table legs, a door damper, a sliding door rail, and a curtain rail.

EXAMPLES

The present invention is described further specifically with reference to Examples below. The present invention is not limited only to Examples below.

In the raw materials used below and Examples and Comparative examples below, part and % are on a mass basis unless otherwise specified.

The contents of the components (A), (B), (C), and (D) and the content of the component (A) that includes a structural unit (GMA unit) derived from an α,β-unsaturated glycidyl ester compound were determined with the total content of the components (A), (B), and (C) being 100%.

In Tables 1 to 3 below, the proportion of the ultrahigh-molecular-weight component (Q2) in the chloroform soluble component (Q) of the vinyl resin included in the thermoplastic resin composition is referred to as "Proportion of ultrahigh-molecular-weight component (Q2)".

(1) Evaluation Methods

(1-1) Creaking Noise Evaluation (Noise Risk Number)

A specific one of the thermoplastic resin compositions prepared in Examples and Comparative examples was injection-molded with an injection molding machine "IS-170FA" (product name) produced by Toshiba Machine Co., Ltd. at a cylinder temperature of 240°C, an injection pressure of 80 MPa, and a die temperature of 60°C to form a molded article having a length of 150 mm, a width of 100 mm, and a thickness of 4 mm. Two specimens, that is, a large specimen having a length of 60 mm, a width of 100 mm, and a thickness of 4 mm and a small specimen having a length of 50 mm, a width of 25 mm, and a thickness of 4 mm, were taken from the molded article with a circular saw. The edges of the specimens were chamfered with a #100-grit sandpaper. Subsequently, fine burrs were removed with a box cutter. Hereby, large and small specimens for creaking noise evaluation were prepared.

The evaluation specimens were heat-aged for 300 hours in an oven kept at 75°C ± 5°C and then cooled for 24 hours at 25°C. Subsequently, the large and small specimens were placed in a stick-slip tester "SSP-02" produced by ZIEGLER. The two specimens were rubbed against each other 3 times at an amplitude of 20 mm under the conditions described in Tables 1 to 3, that is, at a load of 5 or 40 N and a speed of 1 or 10 mm/sec, in an atmosphere having a temperature of 23°C and a humidity of 50%R.H. Then, the noise risk number was measured. The larger the noise risk number, the higher the occurrence of the creaking noises. Since an evaluation is made by performing heat-aging in this testing method, the sustainability of the creaking noise reduction effect can also be evaluated.

(1-2) Surface Gloss

A specific one of the thermoplastic resin compositions prepared in Examples and Comparative examples was injection-molded with an injection molding machine "EC130SX" (model name) produced by Toshiba Machine Co., Ltd. to form a plate-like crimped specimen having a size of 80 mm × 120 mm × 2.0 mm. The specimen had a side gate having a size of 7 mm × 1.6 mm at two positions on one of the 120-mm sides. During molding, the resin temperature was 260°C, the die temperature was 80°C, and the injection speed was 30 mm/sec. The surface gloss of the crimped surface (TH-105) of the specimen was measured in accordance with JIS K 7105, with a digital gloss meter (model name "VG7000" produced by Nippon Denshoku Industries Co., Ltd.). The measurement angle was 60°. This value is preferably 4.0 or less.

(1-3) Inconsistency in Matting

A specific one of the thermoplastic resin compositions prepared in Examples and Comparative examples was injection-molded with an injection molding machine "EC130SX" (model name) produced by Toshiba Machine Co., Ltd. to form a plate-like crimped specimen having a size of 80 mm × 120 mm × 2.0 mm. The specimen had a side gate having a size of 47 mm × 11.6 mm at an end of one of the 120-mm sides. During molding, the resin temperature was 260°C, the die temperature was 80°C, and the injection speed was 30 or 70 mm/sec. The surface gloss of the crimped surface (TH-105) of the specimen was measured in accordance with JIS K 7105, with a digital gloss meter (model name "VG7000" produced by Nippon Denshoku Industries Co., Ltd.). The measurement angle was 60°. In the case where the thermoplastic resin composition does not include an ultrahigh-molecular-weight component, poor appearance (inconsistency in gloss) occurs due to the difference in gloss. In the evaluation of the appearance of a molded article (inconsistency in gloss), when the difference in gloss at the position in which inconsistency in gloss occurred was 0.4 points or more, an evaluation of "Poor" (inconsistency in gloss was present) was given in terms of molded article appearance, while an evaluation of "Good" (inconsistency in gloss was absent) was given in terms of molded article appearance when the above gloss difference was 0.3 points or less.

(1-4) Charpy Impact Strength

A Charpy impact strength (edgewise impact, with notch) at room temperature was measured in accordance with ISO 179. The unit of Charpy impact strength is KJ/m$^2$. The following measurement conditions were used.

Specimen type: Type 1
Notch type: Type A
Load: 2 J

(1-5) MFR

A melt mass-flow rate was measured at a temperature of 240°C and a load of 98 N in accordance with ISO 1133.

(2) Raw Materials Used

<Vinyl Graft Polymer (A)>

Ethylene-α-Olefin Rubber-Reinforced Aromatic Vinyl Resin (P-1-1) :

Into a stainless steel autoclave having a volume of 20 liters which was equipped with a ribbon impeller, an agent continuous addition device, a thermometer, etc., 22 parts of an ethylene-propylene copolymer (ethylene unit/propylene unit = 78/22 (%), Mooney viscosity (ML1+4,100°C): 20, melting point (Tm): 40°C, glass-transition temperature (Tg): -50°C) used as an ethylene-α-olefin rubbery polymer (a), 55 parts of styrene, 23 parts of acrylonitrile, 0.5 parts of t-dodecylmercaptan, and 110 parts of toluene were charged. The temperature of the inside of the autoclave was increased to 75°C. Then, the contents of the autoclave were stirred for 1 hour to form a uniform solution. Subsequently, 0.45 parts of t-butylperoxy isopropyl monocarbonate was added to the solution. Then, the internal temperature was further increased. After the temperature had reached 100°C, while the temperature was maintained at 100°C, a polymerization reaction was conducted at a stirring rotation speed of 100 rpm. After 4 hours since the polymerization reaction was started, the internal temperature was increased to 120°C. Then, while the temperature was maintained at 120°C, the reaction was conducted another 2 hours. Subsequently, the polymerization reaction was finished. The polymerization conversion ratio was 98%. Then, the internal temperature was reduced to 100°C.

The resulting reaction mixture was removed from the autoclave, and unreacted substances and solvents were distilled away by steam distillation. Furthermore, volatile matter was substantially degassed and the reaction mixture was formed into pellets with an extruder having a 40-mm diameter vent (cylinder temperature: 220°C, degree of vacuum: 760 mmHg).

The content of the ethylene-α-olefin rubbery polymer (a) in the resulting ethylene-α-olefin rubber-reinforced vinyl resin (P-1-1) was 22% (calculated on the basis of polymerization conversion ratio). The graft ratio of the ethylene-α-olefin rubber-reinforced vinyl resin (P-1-1) was 70%. The limiting viscosity [η] of the chloroform soluble component (free AS) was 0.47 dl/g (Mw: 90,000).

Diene Rubber-Reinforced Aromatic Vinyl Resin (P-2-1):

Into a polymerization vessel equipped with a stirrer, 280 parts of water, 60 parts (in terms of solid content) of a polybutadiene latex having a weight-average particle size of 0.26 μm and a gel fraction of 90% which served as a diene rubbery polymer, 0.3 parts of sodium formaldehydesulfoxylate, 0.0025 parts of ferrous sulfate, and 0.01 parts of disodium ethylenediaminetetraacetate were charged. After deoxidation, the resulting mixture was heated to 60°C while being stirred in a stream of nitrogen. Subsequently, a monomer mixture including 10 parts of acrylonitrile, 30 parts of styrene, 0.2 parts of t-dodecylmercaptan, and 0.3 parts of cumene hydroperoxide was continuously added dropwise to the mixture over 5 hours at 60°C. After the dropwise addition had been finished, the polymerization temperature was set to 65°C and stirring was continued for 1 hour. Then, polymerization was finished. Hereby, a latex of a graft copolymer was prepared. The polymerization conversion ratio was 98%.

To the latex, 0.2 parts of 2,2'-methylene-bis(4-ethylene-6-t-butylphenol) was added. The resulting mixture was solidified by the addition of calcium chloride. Then, cleaning, filtration, and drying were performed. Hereby, a powdery rubber-reinforced aromatic vinyl resin was prepared.

The content of a diene rubbery polymer in the diene rubber-reinforced aromatic vinyl resin (P-2-1) was 60%. The graft ratio of the diene rubber-reinforced aromatic vinyl resin (P-2-1) was 40%. The limiting viscosity [η] of the chloroform soluble component (free AS) was 0.38 dl/g (Mw: 79,000).

GMA-Modified Diene Rubber-Reinforced Aromatic Vinyl Resin (P-2-2) :

Into a polymerization vessel equipped with a stirrer, 280 parts of water, 60 parts (in terms of solid content) of a polybutadiene latex having a weight-average particle size of 0.26 μm and a gel fraction of 90% which served as a diene rubbery polymer, 0.3 parts of sodium formaldehydesulfoxylate, 0.0025 parts of ferrous sulfate, and 0.01 parts of

16

disodium ethylenediaminetetraacetate were charged. After deoxidation, the resulting mixture was heated to 60°C while being stirred in a stream of nitrogen. Subsequently, a monomer mixture including 9 parts of acrylonitrile, 27 parts of styrene, 4 parts of glycidyl methacrylate (GMA), 0.2 parts of t-dodecylmercaptan, and 0.3 parts of cumene hydroperoxide was continuously added dropwise to the mixture over 5 hours at 60°C. After the dropwise addition had been finished, the polymerization temperature was set to 65°C and stirring was continued for 1 hour. Then, polymerization was finished. Hereby, a latex of a graft copolymer was prepared. The polymerization conversion ratio was 98%.

To the latex, 0.2 parts of 2,2'-methylene-bis(4-ethylene-6-t-butylphenol) was added. The resulting mixture was solidified by the addition of calcium chloride. Then, cleaning, filtration, and drying were performed. Hereby, a powdery rubber-reinforced aromatic vinyl resin was prepared.

The content of a diene rubbery polymer in the GMA-modified diene rubber-reinforced aromatic vinyl resin (P-2-2) was 60%. The graft ratio of the GMA-modified diene rubber-reinforced aromatic vinyl resin (P-2-2) was 31%. The limiting viscosity $[\eta]$ of the chloroform soluble component (free AS) was 0.3 dl/g (Mw: 43,000).

<Vinyl Non-Graft Polymer (B)>

Styrene-Acrylonitrile Copolymer (AS-1):

Into a polymerization container equipped with a stirrer, 250 parts of water and 1.0 parts of sodium palmitate were charged. After deoxidation, the resulting mixture was heated to 70°C while being stirred in a stream of nitrogen. Into the polymerization container, 0.4 parts of sodium formaldehydesulfoxylate, 0.0025 parts of ferrous sulfate, and 0.01 parts of disodium ethylenediaminetetraacetate were further charged. Subsequently, 100 parts of a monomer mixture including 70 parts (70% of the monomer mixture) of $\alpha$-methylstyrene, 26 parts (26% of the monomer mixture) of acrylonitrile, and 4 parts (4% of the monomer mixture) of styrene was mixed with 0.45 parts of tert-dodecylmercaptan, and the resulting mixture was continuously added dropwise to the container over 7 hours at a polymerization temperature of 70°C. After the dropwise addition had been finished, the polymerization temperature was set to 75°C and stirring was continued for 1 hour. Then, polymerization was finished. Hereby, a latex was prepared.

The latex was subjected to salting out with calcium chloride. Then, cleaning, filtration, and drying were performed. Hereby, a powdery copolymer (AS-1) was prepared.

The copolymer (AS-1) had a polymerization conversion ratio of 98%, a limiting viscosity $[\eta]$ (in methyl ethyl ketone, at 30°C) of 0.8 dl/g (Mw: 150,000), and a glass-transition temperature (Tg) of 140°C.

Styrene-Acrylonitrile Copolymer (AS-2):

To a reaction container having a capacity of 10 liters which was equipped with a thermometer and a stirrer, 250 parts of ion-exchange water was added. After nitrogen bubbling had been performed for 30 minutes, 0.50 parts of potassium stearate used as an emulsifier was added to the container. Subsequently, 35 parts of styrene and 15 parts of acrylonitrile, which were used as monomer components, were added to the container in a nitrogen atmosphere. Then, the temperature was increased. When the temperature had reached 55°C, a 2% aqueous solution containing 0.03 parts of potassium persulfate used as a polymerization initiator was added to the container. After polymerization had been performed for 2 hours at 65°C, 35 parts of styrene, 15 parts of acrylonitrile, 50 parts of ion-exchange water, and 0.02 parts of potassium persulfate (2% aqueous solution) were added to the container at a time. Then, polymerization was further performed for another 3 hours at 65°C. The concentration of dissolved oxygen in the polymerization liquid was 3.0%.

The copolymer (AS-2) had a polymerization conversion ratio of 97% and a limiting viscosity $[\eta]$ (in methyl ethyl ketone, at 30°C) of 3.5 dl/g (Mw: 3,100,000).

Styrene-Acrylonitrile Copolymer (AS-3):

A monomer mixture was prepared by mixing 70 parts of $\alpha$-methylstyrene, 5 parts of styrene, 25 parts of acrylonitrile, and 0.02 parts of tert-dodecylmercaptan with one another.

An aqueous solution of a reducing agent was prepared by dissolving 0.015 parts of disodium ethylenediaminetetraacetate, 0.005 parts of ferrous sulfate, and 0.4 parts of sodium formaldehydesulfoxylate in 20 parts of water. Furthermore, an aqueous solution of a polymerization initiator was prepared by emulsifying and dispersing 4 parts of sodium dodecylbenzenesulfonate and 0.25 parts of p-menthane hydroperoxide in 100 parts of water.

Into a glass reaction container equipped with a polymerization stirring device, a raw material-agent addition device, a thermometer, a heating apparatus, etc., 200 parts of water, 2 parts of sodium dodecylbenzenesulfonate, and 0.2 parts of a sodium salt of $\beta$-naphthalenesulfonic acid formalin polycondensate were charged. Subsequently, the reaction system was heated in the stream of nitrogen while the inside of the system was stirred. After the internal temperature had reached 60°C, the entire amount of the above monomer mixture, 70% of the amount of the above aqueous reducing agent solution, and 70% of the amount of the above aqueous polymerization initiator solution were continuously added to the container over 5 hours to start polymerization. The temperature of the reaction system was increased to 70°C when the polymerization was started and then kept at 70°C. After a lapse of 5 hours since the polymerization was started, the remaining 30% of the amount of the aqueous reducing agent solution and the remaining 30% of the aqueous polymerization initiator solution were fed to the reaction container. Then, the reaction system was held for 1 hour at 70°C. Subsequently, the polymerization reaction was finished.

Hereby, a latex including an $\alpha$-methylstyrene copolymer was prepared. A magnesium sulfate (coagulant) was added to the latex in order to solidify the $\alpha$-methylstyrene copolymer. Subsequently, the $\alpha$-methylstyrene copolymer was recovered by washing with water and drying.

The resulting AS copolymer (AS-3) had a limiting viscosity (in methyl ethyl ketone, at 30°C) of 0.7 dl/g (Mw: 127,000).

<Matting Agent (C)>

R-1:

A matting agent for ABS resins "Levital Matace AM-808" (product name, amorphous diene rubber-modified copolymer resin) produced by Zeon Kasei Co., Ltd. was used as an organic matting agent (R-1).

The results of an observation of AM-808 with a transmission electron microscope confirmed that the diene rubber-modified copolymer resin was present in the form of amorphous amoeboid particles.

R-2:

A matting agent "METABLEN F-410" (product name, (crosslinked) rubbery polymer) produced by Mitsubishi Rayon Co., Ltd. was used as an organic matting agent (R-2).

F-410 is a crosslinked methyl methacrylate-alkyl acrylate-styrene copolymer.

R-3:

A talc micropowder "MICRO ACE P-3" (product name) produced by Nippon Talc Co., Ltd. was used as an inorganic matting agent (R-3).

The particle size $D_{50}$ of R-3 measured by a laser diffraction method was 5 $\mu$m.

R-4:

An acryl rubber matting-light diffusion modifier "Kane Ace MP-90" (product name, (crosslinked) rubbery polymer) produced by Kaneka Corporation was used as an organic matting agent (R-4).

<Polycarbonate Resin (D)>

D-1:

A polycarbonate resin "NOVAREX 7022 PJ-LHI" produced by Mitsubishi Engineering-Plastics Corporation was used.

[Examples and Comparative Examples]

The above components were mixed with one another at a specific one of the blending ratios described in Tables 1 to 3. The resulting mixture was stirred with a Henschel mixer and subsequently melt-kneaded with a twin-screw extruder ("TEX44$\alpha$" produced by The Japan Steel Works, Ltd., barrel preset temperature: 250°C) to form pellets.

Evaluation specimens were formed using the above pellets as described above and used for evaluation. Tables 1 to 3 list the evaluation results.

[Table 1]

| | | | | Examples | | | | | | |
|---|---|---|---|---|---|---|---|---|---|---|
| | | | | 1 | 2 | 3 | 4 | 5 | 6 | 7 |
| Composition of thermoplastic resin composition (part) | Vinyl graft polymer (A)* | (A1) | P-1-1 | 20 | 20 | 20 | 20 | 20 | 20 | 20 |
| | | (A2) | P-2-1 | | | | 5 | 5 | | |
| | | | P-2-2 | 20 | 20 | 20 | | | 10 | 10 |
| | Vinyl non-graft polymer (B) | (B3) | AS-1 | 38 | 38 | 38 | 8 | 8 | 8 | 8 |
| | | | AS-2 | 2 | 2 | 2 | 2 | 2 | 2 | 2 |
| | | | AS-3 | 15 | 15 | 15 | | | | |
| | Matting agent (C) | | R-1 | 5 | | | 10 | | 5 | |
| | | | R-2 | | 5 | | | 10 | | 5 |
| | | | R-3 | | | | | | | |
| | | | R-4 | | | 5 | | | | |
| | Polycarbonate resin (D) | | D-1 | | | | 55 | 55 | 55 | 55 |
| | Total | | | 100 | 100 | 100 | 100 | 100 | 100 | 100 |
| Proportion of thermoplastic resin composition (part) | | Chloroform insoluble component | | 23.2 | 23.2 | 23.2 | 11.7 | 11.7 | 15.4 | 15.4 |
| | | Chloroform soluble component | | 71.8 | 71.8 | 71.8 | 23.3 | 23.3 | 24.6 | 24.6 |
| Structure of rubbery polymer (mass ratio) | | Ethylene-$\alpha$-olefin rubber | | 27 | 27 | 27 | 59 | 59 | 42 | 42 |
| | | Diene rubber | | 73 | 73 | 73 | 41 | 41 | 58 | 58 |
| Proportion of ultrahigh-molecular-weight component (Q2) (%) | | | | 2.8 | 2.8 | 2.8 | 8.6 | 8.6 | 8.1 | 8.1 |
| Content of component including GMA unit (%) | | | | 20 | 20 | 20 | 0 | 0 | 22.22 | 22.22 |
| Content of component (D) (%) | | | | 0 | 0 | 0 | 122 | 122 | 122 | 122 |
| Gloss of crimped surface (60°) | | | | 1 | 0.9 | 0.9 | 2.3 | 1.4 | 2.2 | 1.7 |
| Inconsistency in matting | | | | Good | Good | Good | Good | Good | Good | Good |
| MFR (240°C×10kg) (g/10min) | | | | 11 | 13 | 10 | 20 | 18 | 19 | 16 |
| Charpy impact strength (kJ/m$^2$) | | | | 33 | 11 | 17 | 52 | 37 | 46 | 46 |
| Creaking noise evaluation, noise risk number, after aging (same material type) | | 5N, 1mm/sec | | 1 | 1 | 1 | 1 | 1 | 1 | 1 |
| | | 5N, 10mm/sec | | 1 | 1 | 1 | 2 | 1 | 2 | 1 |
| | | 40N, 1mm/sec | | 1 | 1 | 1 | 2 | 1 | 1 | 1 |
| | | 40N, 10mm/sec | | 1 | 1 | 2 | 2 | 2 | 2 | 2 |
| * Including free polymers (B1) and (B2) | | | | | | | | | | |

[Table 2]

| | | | | Examples | | | | | | |
|---|---|---|---|---|---|---|---|---|---|---|
| | | | | 8 | 9 | 10 | 11 | 12 | 13 | 14 |
| Composition of thermoplastic resin composition (part) | Vinyl graft polymer (A)* | (A1) | P-1-1 | 20 | 20 | 20 | 20 | | | 20 |
| | | (A2) | P-2-1 | | | | | 10 | 10 | |
| | | | P-2-2 | 10 | 10 | 10 | 10 | 20 | 20 | 10 |
| | Vinyl non-graft polymer (B) | (B3) | AS-1 | 5 | 3 | 8 | 3 | 48 | 48 | |
| | | | AS-2 | 5 | 2 | 2 | 2 | 2 | 2 | 10 |
| | | | AS-3 | | | | | 15 | 15 | |
| | Matting agent (C) | | R-1 | | 5 | | | 5 | | |
| | | | R-2 | 5 | | | 5 | | 5 | 5 |
| | | | R-3 | | 5 | | 5 | | | |
| | | | R-4 | | | 5 | | | | |
| | Polycarbonate resin (D) | | D-1 | 55 | 55 | 55 | 55 | | | 55 |
| | Total | | | 100 | 100 | 100 | 100 | 100 | 100 | 100 |
| Proportion of thermoplastic resin composition (part) | | Chloroform insoluble component | | 15.4 | 15.4 | 15.4 | 15.4 | 24.1 | 24.1 | 15.4 |
| | | Chloroform soluble component | | 24.6 | 19.6 | 24.6 | 19.6 | 70.9 | 70.9 | 24.6 |
| Structure of rubbery polymer (mass ratio) | | Ethylene-$\alpha$-olefin rubber | | 42 | 42 | 42 | 42 | 0 | 0 | 42 |
| | | Diene rubber | | 58 | 58 | 58 | 58 | 100 | 100 | 58 |
| Proportion of ultrahigh-molecular-weight component (Q2) (%) | | | | 20.3 | 10.2 | 8.1 | 10.2 | 2.8 | 2.8 | 40.6 |
| Content of component including GMA unit (%) | | | | 22.22 | 22.22 | 22.22 | 22.22 | 20 | 20 | 22.22 |
| Content of component (D) (%) | | | | 122 | 122 | 122 | 122 | 0 | 0 | 122 |
| Gloss of crimped surface (60°) | | | | 2 | 2.3 | 2.2 | 1.9 | 1 | 0.9 | 2.1 |
| Inconsistency in matting | | | | Good | Good | Good | Good | Good | Good | Good |
| MFR (240°C×10kg) (g/10min) | | | | 16 | 15 | 15 | 16 | 6 | 6 | 11 |
| Charpy impact strength (kJ/m$^2$) | | | | 44 | 51 | 39 | 42 | 29 | 13 | 44 |
| Creaking noise evaluation, noise risk number, after aging (same material type) | | 5N, 1mm/sec | | 1 | 1 | 1 | 1 | 7 | 6 | 1 |
| | | 5N, 10mm/sec | | 2 | 1 | 2 | 2 | 9 | 6 | 2 |
| | | 40N, 1mm/sec | | 1 | 1 | 2 | 2 | 10 | 10 | 1 |
| | | 40N, 10mm/sec | | 2 | 2 | 2 | 2 | 10 | 10 | 2 |

* Including free polymers (B1) and (B2)

[Table 3]

| | | | | | Comparative examples | | | | |
|---|---|---|---|---|---|---|---|---|---|
| | | | | | 1 | 2 | 3 | 4 | 5 |
| Composition of thermoplastic resin composition (part) | Vinyl graft polymer (A)* | (A1) | P-1-1 | | 20 | 20 | 20 | 20 | |
| | | (A2) | P-2-1 | | | | | | 10 |
| | | | P-2-2 | | 20 | 10 | 10 | 10 | 20 |
| | Vinyl non-graft polymer (B) | (B3) | AS-1 | | 40 | 10 | 10 | 5 | 50 |
| | | | AS-2 | | | | | | |
| | | | AS-3 | | 15 | | | | 15 |
| | Matting agent (C) | | R-1 | | 5 | 5 | | 5 | 5 |
| | | | R-2 | | | | 5 | | |
| | | | R-3 | | | | | 5 | |
| | | | R-4 | | | | | | |
| | Polycarbonate resin (D) | | D-1 | | | 55 | 55 | 55 | |
| | Total | | | | 100 | 100 | 100 | 100 | 100 |
| Proportion of thermoplastic resin composition (part) | Chloroform insoluble component | | | | 23.2 | 15.4 | 15.4 | 15.4 | 24.1 |
| | Chloroform soluble component | | | | 71.8 | 24.6 | 24.6 | 19.6 | 70.9 |
| Structure of rubbery polymer (mass ratio) | Ethylene-ex-olefin rubber | | | | 27 | 42 | 42 | 42 | 0 |
| | Diene rubber | | | | 73 | 58 | 58 | 58 | 100 |
| Proportion of ultrahigh-molecular-weight component (Q2) (%) | | | | | 0 | 0 | 0 | 0 | 0 |
| Content of component including GMA unit (%) | | | | | 20 | 22.22 | 22.22 | 22.22 | 20 |
| Content of component (D) (%) | | | | | 0 | 122 | 122 | 122 | 0 |
| Gloss of crimped surface (60°) | | | | | 0.9 | 1.9 | 1.5 | 2 | 1 |
| Inconsistency in matting | | | | | Poor | Poor | Poor | Poor | Poor |
| MFR (240°C×10kg) (g/10min) | | | | | 15 | 20 | 23 | 17 | 6 |
| Charpy impact strength (kJ/m$^2$) | | | | | 31 | 48 | 39 | 51 | 29 |
| Creaking noise evaluation, noise risk number, after aging (same material type) | 5N, 1mm/sec | | | | 1 | 1 | 1 | 1 | 7 |
| | 5N, 10mm/sec | | | | 2 | 1 | 1 | 2 | 6 |
| | 40N, 1mm/sec | | | | 1 | 1 | 1 | 1 | 10 |
| | 40N, 10mm/sec | | | | 2 | 2 | 2 | 2 | 10 |
| * Including free polymers (B1) and (B2) | | | | | | | | | |

As described in Tables 1 and 2, the thermoplastic resin compositions prepared in Examples were excellent in terms of matte property. Furthermore, the occurrence of creaking noises was reduced in the case where the specimens were placed at high temperatures for a long period of time.

In contrast, as described in Table 3, the thermoplastic resin compositions prepared in Comparative examples all had a poor matte property.

Industrial Applicability

According to the present invention, a molded article formed of a thermoplastic resin composition including a vinyl graft polymer (A), a vinyl non-graft polymer (B), and a matting agent (C), the molded article having a consistent appearance excellent in terms of matte property, can be provided. In particular, when the vinyl graft polymer (A) includes an ethylene-$\alpha$-olefin rubbery polymer, a contact part that markedly reduces creaking noises emitted when the contact part comes into contact and rubs against another member and that has an appearance excellent in terms of matte property and a structure including such a contact part can be provided. In such a case, the occurrence of creaking noises can be reduced even in the case where the part or structure is placed at high temperatures for a long period of time.

Although the present invention has been described in detail by way of the specific modes, it is apparent for those skilled in the art that various changes can be made without departing from the spirit and scope of the present invention.

The present application is based on Japanese Patent Application No. 2019-186135 filed on October 9, 2019, the entire contents of which are incorporated herein by reference.

Reference Signs List

| 10, 18, 20, 28 | PART |
| 19 | SHAFT |
| 29 | OPENING |
| 30 | PROTRUSION |
| 31 | ADHESIVE |
| 33 | BOLT AND NUT |

**Claims**

1. A thermoplastic resin composition comprising a vinyl graft polymer (A), a vinyl non-graft polymer (B), and a matting agent (C), wherein a mass ratio (Q1)/(Q2) of a vinyl resin component (Q1) of a chloroform soluble component (Q) of the thermoplastic resin composition, the vinyl resin component (Q1) having a weight-average molecular weight of less than 1,000,000, to a vinyl resin component (Q2) of the chloroform soluble component (Q), the vinyl resin component (Q2) having a weight-average molecular weight of 1,000,000 or more, is 99.5/0.5 to 55/45.

2. The thermoplastic resin composition according to Claim 1, wherein a content of the vinyl graft polymer (A) is 1% to 70% by mass, with a total content of the vinyl graft polymer (A), the vinyl non-graft polymer (B), and the matting agent (C) being 100% by mass.

3. The thermoplastic resin composition according to Claim 1 or 2, wherein a content of the matting agent (C) is 1% to 30% by mass, with the total content of the vinyl graft polymer (A), the vinyl non-graft polymer (B), and the matting agent (C) being 100% by mass.

4. The thermoplastic resin composition according to any one of Claims 1 to 3, wherein the matting agent (C) is a polymer matting agent (C1).

5. The thermoplastic resin composition according to Claim 4, wherein the polymer matting agent (C1) is a resin composition (C2) including a copolymer resin (cl) of acrylonitrile with styrene and/or $\alpha$-methylstyrene and a component (c2) including an unsaturated nitrile-conjugated diene copolymer rubber, the unsaturated nitrile-conjugated diene copolymer rubber forming crosslinks.

6. The thermoplastic resin composition according to any one of Claims 1 to 5, further comprising a polycarbonate resin (D).

7. The thermoplastic resin composition according to Claim 6, wherein a content of the polycarbonate resin (D) is 30% to 400% by mass, with the total content of the vinyl graft polymer (A), the vinyl non-graft polymer (B), and the matting agent (C) being 100% by mass.

8. The thermoplastic resin composition according to any one of Claims 1 to 7, wherein the vinyl graft polymer (A) includes an ethylene-$\alpha$-olefin rubbery polymer (a1).

9. A molded article formed of the thermoplastic resin composition according to any one of Claims 1 to 8.

[Fig.1]

**Fig. 1**

[Fig.2]

**Fig.2 a**

**Fig.2 b**

**Fig.2 c**

**Fig.2 d**

[Fig.3]

Fig.3

10

20

[Fig.4]

Fig.4

20

10

[Fig.5]

## Fig.5

20

10

[Fig.6]

# Fig.6

[Fig.7]

# Fig.7

[Fig.8]

Fig.8

[Fig.9]

Fig.9A

Fig.9B

Fig.9C

[Fig.10]

Fig.10

20

30

[Fig.11]

Fig.11A

10

C

C

20

31

31

Fig.11B

31

10

20

Fig.11C

10

LOAD ⇨

31

20

⇦ LOAD

31

20

[Fig.12]

## Fig.12A

10

C

C

33          33

20

## Fig.12B

10

33

20

## Fig.12C

10

LOAD ⇨          ⇦ LOAD

33          33
20    20

[Fig.13]

Fig.13

[Fig.14]

## Fig.14A

## Fig.14B

## Fig.14C

(C)

**INTERNATIONAL SEARCH REPORT**

| International application No. |
|---|
| PCT/JP2020/036287 |

| A. CLASSIFICATION OF SUBJECT MATTER |
|---|
| C08F 255/04(2006.01)i; C08F 279/02(2006.01)i; C08L 51/04(2006.01)i; C08L 69/00(2006.01)i; C08L 101/00(2006.01)i<br>FI: C08L51 /04; C08L101 /00; C08L69/00; C08F255/04; C08F279/02<br>According to International Patent Classification (IPC) or to both national classification and IPC |

| B. FIELDS SEARCHED |
|---|
| Minimum documentation searched (classification system followed by classification symbols)<br>C08F255/04; C08F279/02; C08L51/04; C08L69/00; C08L101/00 |

| Documentation searched other than minimum documentation to the extent that such documents are included in the fields searched |
|---|
| Published examined utility model applications of Japan    1922–1996<br>Published unexamined utility model applications of Japan    1971–2020<br>Registered utility model specifications of Japan    1996–2020<br>Published registered utility model applications of Japan    1994–2020 |

| Electronic data base consulted during the international search (name of data base and, where practicable, search terms used) |
|---|
| |

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2011-168778 A (TECHNO POLYMER CO., LTD.) 01 September 2011 (2011-09-01) claims, paragraph [0108], examples | 1, 6-7, 9<br>2-5, 8 |
| Y | JP 2011-137066 A (TECHNO POLYMER CO., LTD.) 14 July 2011 (2011-07-14) claims, paragraph [0081], examples 8, 9 | 1-9 |
| Y | WO 2018/221742 A1 (TECHNO UMG CO., LTD.) 06 December 2018 (2018-12-06) claims, paragraphs [0065]-[0066], [0105] | 1-9 |
| A | JP 2010-001377 A (ZEON CORP.) 07 January 2010 (2010-01-07) entire text | 1-9 |
| A | JP 2009-256551 A (MITSUBISHI ENGINEERING-PLASTICS CORPORATION) 05 November 2009 (2009-11-05) entire text | 1-9 |

☐ Further documents are listed in the continuation of Box C.    ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 25 November 2020 (25.11.2020) | 08 December 2020 (08.12.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

INTERNATIONAL SEARCH REPORT
Information on patent family members

International application no.

PCT/JP2020/036287

| Patent Documents referred in the Report | Publication Date | Patent Family | Publication Date |
|---|---|---|---|
| JP 2011-168778 A | 01 Sep. 2011 | US 2013/0023618 A1 claims, paragraph [0131], examples CN 102770489 A pp. 2-3, 16-30 | |
| JP 2011-137066 A | 14 Jul. 2011 | (Family: none) | |
| WO 2018/221742 A1 | 06 Dec. 2018 | (Family: none) | |
| JP 2010-001377 A | 07 Jan. 2010 | (Family: none) | |
| JP 2009-256551 A | 05 Nov. 2009 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009256551 A
- JP 2576863 B
- JP 2010001377 A
- JP 2019186135 A